# EUROPÄISCHE PATENTSCHRIFT

(11) **EP 4 375 649 B1**
(45) Veröffentlichungstag und Bekanntmachung des Hinweises auf die Patenterteilung: **18.06.2025**
(21) Anmeldenummer: 23198642.3
(22) Anmeldetag: 20.09.2023
(51) Int. Cl.: G01N 23/046

(54) **KALIBRIERNORMAL FÜR EINEN INDUSTRIELLEN COMPUTERTOMOGRAPHEN**
CALIBRATION STANDARD FOR AN INDUSTRIAL COMPUTER TOMOGRAPH
ÉTALON DE CALIBRAGE POUR UN TOMODENSITOMÈTRE INDUSTRIEL

(30) Priorität: 22.11.2022 DE 102022212466
(43) Veröffentlichungstag der Anmeldung: 29.05.2024
(73) Patentinhaber: GOEKELER Messtechnik GmbH, 73252 Lenningen (DE)
(72) Erfinder: Gökeler, Timo, 73252 Lenningen (DE); Weißer, Jörg, 78112 St. Georgen (DE); Fischer, André, 73252 Lenningen (DE)
(74) Vertreter: Kohler Schmid Möbus Patentanwälte

(56) Entgegenhaltungen:
- JP-A- 2001 149 363
- US-A1- 2016 095 569
- OBATON ANNE-FRANÇOISE ET AL: "Reference standards for XCT measurements of additively manufactured parts", E-JOURNAL OF NONDESTRUCTIVE TESTING AND ULTRASONICS, vol. 25, no. 2, 5 February 2020 (2020-02-05), DE, XP093130167, ISSN: 1435-4934, DOI: 10.58286/25111

## Beschreibung

Die Erfindung betrifft ein Kalibriernormal für einen industriellen Computertomographen,
wobei das Kalibriernormal einen Grundkörper mit einer Längsachse aufweist,
wobei der Grundkörper eine Außenfläche aufweist, die bezüglich einer Umfangsrichtung um die Längsachse herum durchgehend umlaufend ausgebildet ist und sich entlang der Längsachse erstreckt,
wobei an dem Grundkörper über die radial nach außen gerichtete Außenfläche verteilt eine Vielzahl von Kalibrier-Kugelelementen befestigt ist,
wobei die Kalibrier-Kugelelemente über eine Vielzahl von axialen Positionen bezüglich der Längsachse verteilt sind,
wobei der Grundkörper sich im Bereich der Außenfläche entlang der Längsachse verjüngt,
und wobei die Kalibrier-Kugelelemente über eine Vielzahl von radialen Positionen bezüglich der Längsachse verteilt sind.

Ein solches Kalibriernormal ist aus der JP 2001 149363 A bekannt geworden.

Industrielle Computertomographie (im Folgenden ICT) wird dazu eingesetzt, um Bauteile mit hoher Präzision in Bereichen zu vermessen, die mit herkömmlichen Messmethoden nicht zugänglich sind. Insbesondere das Innere eines Bauteils kann mit ICT vermessen werden, um dieses auf korrekte Innenabmessungen, und Materialfehler, etwa Lunker oder Poren, zu überprüfen. Bei der ICT werden von dem Bauteil in verschiedenen Drehpositionen jeweils Röntgenbilder ("Schattenwürfe") angefertigt. Aus den Röntgenbildern der verschiedenen Drehpositionen kann die dreidimensionale Röntgendichte des Bauteils sodann errechnet werden. Eine typische ICT-Messapparatur umfasst eine Röntgenquelle, einen Drehhalter für das zu vermessende Bauteil und einen zweidimensional (=2D) auflösenden Röntgendetektor.

Um eine hohe Präzision der ICT sicherzustellen, muss die Messgenauigkeit der ICT-Apparatur überprüft werden. Insbesondere muss sichergestellt werden, dass die ICT-Apparatur keine Abbildungsfehler wie Verzerrungen erzeugt. Zu diesem Zweck ist es bekannt, Testkörper mit vorbekannten Maßen, die auch als Kalibriernormale bezeichnet werden, in der ICT-Apparatur zu vermessen. Wenn die mittels der ICT-Apparatur bestimmten Maße des Kalibriernormals hinreichend mit den vorbekannten (wahren) Maßen des Kalibriernormals übereinstimmen, kann die ICT-Apparatur freigegeben werden. Gegebenenfalls können Differenzen zwischen den mit der ICT-Apparatur bestimmten Maßen und den vorbekannten Maßen des Kalibriernormals dazu verwendet werden, die ICT-Apparatur nachzujustieren. Typischerweise findet eine Überprüfung einer ICT-Apparatur vor erstmaligem Beginn des Messbetriebs und dann in regelmäßigen zeitlichen Abständen statt.

Um die vorbekannten (wahren) Maße des Kalibriernormals zu bestimmen, wird dieses typischerweise vorab taktil mit einer Koordinatenmessmaschine vermessen, d.h. es werden mechanische Fühler (auch genannt Taster) am Kalibriernormal entlanggefahren.

Gebräuchliche Kalibriernormale umfassen mehrere Kalibrier-Kugelelemente, und mit der Koordinatenmessmaschine werden die relativen Positionen der Kalibrier-Kugelelemente (bzw. deren Mittelpunkte) zueinander bestimmt, die dann als vorbekannte Maße des Kalibriernormals für Vergleiche dienen.

Die Firma Carl Zeiss IQS Deutschland GmbH, Oberkochen, DE bietet ein "METRO-TOM Check-Set" an, siehe unter https://shop.metrology.zeiss.de/INTERSHOP/web/WFS/IMT-DE-Site/de DE//EUR/ViewProduct-Start?SKU=626106-9215-000&CategoryName=460410&CatalogID=400000
heruntergeladen am 22.09.2022, welches einen häufig verwendeten Typ von Kalibriernormal repräsentiert. Bei diesem Kalibriernormal stehen von der Stirnseite einer Grundplatte in axialer Richtung Stützstäbchen ab, an deren Enden jeweils eine Rubinkugel befestigt ist. Die Stützstäbchen weisen eine Länge auf, die ca. 10 mal so lang ist wie der Durchmesser der Rubinkugeln. Mehrere Kränze von Stützstäbchen sind radial ineinander geschachtelt, wobei die Stützstäbchen von radial weiter innen liegenden Kränzen axial weiter vorstehen als von radial weiter außen liegenden Kränzen. Nachteilig an dieser Bauform ist es, dass bei einer initialen taktilen Vermessung es zu elastischen Verformungen der Stützstäbchen kommen kann, wodurch die initiale taktile Vermessung des Kalibriernormals ungenau werden kann. Die Koordinatenmessmaschine vermisst dieses Kalibriernormal einschließlich der merklichen, durch die Koordinatenmessmaschine verursachten elastischen Verformungen, welche in einer späteren röntgenographischen Vermessung nicht (oder jedenfalls nicht reproduzierbar) vorliegen werden. Zudem kommt es je nach Drehposition zu Überlappungen der Rubinkugeln eines Kranzes für in radialer Richtung propagierende Röntgenstrahlung, was die Positionsbestimmung der Kalibrierkugeln in der ICT-Apparatur erschweren kann.

Ein ähnliches Kalibriernormal der Firma Carl Zeiss IQS Deutschland GmbH, Oberkochen, DE ist auch aus
https://shop.metrology.zeiss.de/metrotom-check-set-fuer-metrotom-1500-g2-mit-hubtisch-zid626106-9212-000 bekannt geworden.

Die Firma Trapet Precision Engineering, Sarria, Spanien, bietet unter https://trapet.de/de/
heruntergeladen am 22.9.2022, als Kalibriernormale so genannte "Miniatur Dumbbeils" an. Dieses Kalibriernormal umfasst zwei Stützstäbchen, die an beiden Enden jeweils eine Kalibrierkugel aufweisen. Die beiden Stützstäbchen sind an einer Halterung unter rechtem Winkel befestigt. Auch bei dieser Bauform besteht die Gefahr eines elastischen Verbiegens der Stützstäbchen beim taktilen Vermessen. Zudem ist der mittels des Kalibriernormals abgedeckte Raum im Computertomographen gering.

Weiterhin werden auf derselben Website der Trapet Precision Engineering, Sarria, Spanien, "Miniatur Kugeltetraeder aus Rubinkugeln" als Kalibriernormale gezeigt. Bei diesem Kalibriernormal sind vier relativ große Rubinkugeln in tetraedrischer Anordnung mit einem Haltekäfig auf einer Bodenplatte verspannt. Dieser Aufbau ist teuer und aufwändig, und es besteht die Möglichkeit, dass sich die Spannung des Haltekäfigs bei der taktilen Messung oder auch mit der Zeit verändert und dadurch die initiale taktile Vermessung ungenau wird oder auch die die Maße des Kalibriernormals zeitlich nicht konstant sind. Zudem sind die unteren Rubinkugeln stets zumindest teilweise in Überlapp, und der Grad der Überlappung der Rubinkugeln für in radialer Richtung propagierende Röntgenstrahlung hängt sehr stark von der Drehposition ab, was die röntgenographische Vermessung erschweren kann.

Ein weiteres Kalibriernormal ist bekannt geworden durch Obaton, A-F., Klingaa, C. G., Rivet, C., Mohaghegh, K., Baier, S., Andreasen, J. L., Carli, L., & De Chiffre, L. (2020). Reference standards for XCT measurements of additively manufactured parts. Paper presented at 10th Conference on Industrial Computed Tomography, Wels, Austria, dortige Seite 2 Tabelleneintrag "Multi-sphere standard", METAS, Switzerland. Bei diesem Kalibriernormal sind Kalibrierkugeln auf der Außenseite eines zylindermantelförmigen Grundkörpers angeordnet. Die Kalibrierkugeln sind bei einem einheitlichen Radius angeordnet, wodurch etwaige Verzerrungen in der Abbildung bei einer ICT-Apparatur im achsnahen Bereich des Grundkörpers mit diesem Kalibriernormal nur schwer festzustellen sind. Zudem kann es je nach Drehposition zur Überlappung der Kalibrierkugeln für in radialer Richtung propagierende Röntgenstrahlung kommen, was die Positionsbestimmung der Kalibrierkugeln in der ICT-Apparatur erschweren kann.

Ein ähnliches Kalibriernormal ist aus der oben genannten Veröffentlichung von Obaton et al auf Seite 2, Tabelleneintrag "CT tube", DTU, Denmark, Ruby spheres on carbon fiber tube, bekannt geworden.

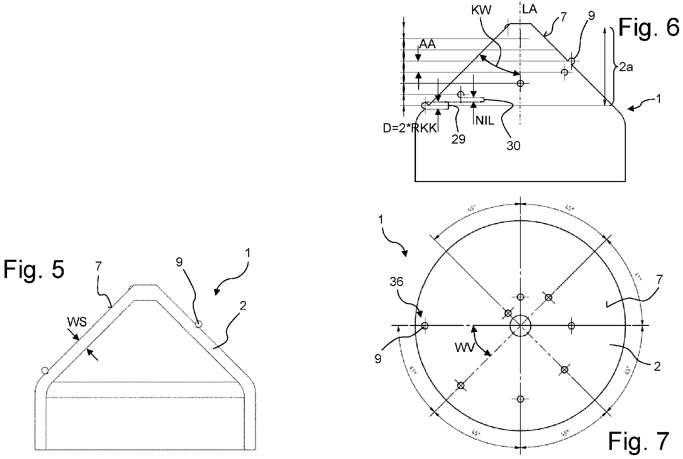

Die oben genannte Veröffentlichung von Oberton offenbart in der dortigen Figur 7 weiterhin ein Kalibriernormal mit axial aufgereihten, zylinderförmigen Abschnitten, wobei der Radius von Abschnitt zu Abschnitt abnimmt. Auf den ringförmigen Stirnflächen der Abschnitte sind Vertiefungen für externe Einsätze ausgebildet.

Zudem erwähnt die oben genannte Veröffentlichung von Oberton auf der dortigen Seite 3 in einem Tabelleneintrag den "Mini star probe" der PTB. Dieser weist an einem Grundkörper vier nach radial außen gerichtete Kugeln sowie eine Kugel an der Spitze auf.

Aus der oben genannten Veröffentlichung von Obaton et al. sind zudem noch zahlreiche weitere Kalibriernormale bekannt geworden, auch ohne Kalibrierkugeln (siehe beispielsweise Seite 2, Tabelleneintrag "Step cylinder", DTU Denmark).

Aus der JP 2001 149363 A, dortige Fig. 4, ist ein Röntgen-Kalibrier-Phantom bekannt geworden, welches auf einem sich zu einer Mitte hin verjüngenden Rotationskörper eine Mehrzahl von Metallkugeln aufweist, die entlang einer Schraubenbahn angeordnet sind.

Die US 2016/0095569 A1 beschreibt ein Phantom für die Kontrolle der Qualität von CT-Abbildungen. Befestigt an oder eingebettet in die Innenseite eines Containers des Phantoms sind sphärische Kugeln angeordnet. Der Container kann insbesondere eine Kegelform oder Ellipsoidform aufweisen.

### Aufgabe der Erfindung

Es ist Aufgabe der Erfindung, ein Kalibriernormal zur Verfügung zu stellen, mit welchem auf einfache Weise eine Überprüfung der Messgenauigkeit einer ICT-Apparatur mit hoher Präzision möglich ist.

### Beschreibung der Erfindung

Diese Aufgabe wird erfindungsgemäß gelöst durch ein Kalibriernormal der eingangs genannten Art,
das dadurch gekennzeichnet ist,
dass das Kalibriernormal weiterhin eine Grundplatte aufweist,
dass an einer Oberseite der Grundplatte der Grundkörper befestigt ist,
und dass an einer Unterseite der Grundplatte ein Dreipunkt-Lager und ein Haltemagnet ausgebildet sind.

Im Rahmen der Erfindung weist das Kalibriernormal einen Grundkörper auf, der eine um die Längsachse herum durchgehend umlaufende Außenfläche aufweist. Verteilt über die Außenfläche, die (zumindest mit einem Richtungsanteil der jeweiligen lokalen Oberflächennormale) nach radial außen gerichtet ist, sind an dem Grundkörper die Kalibrier-Kugelelemente angeordnet.

Der Grundkörper verjüngt sich im Bereich der Außenfläche auf ein vorderes Ende zu. Dadurch ist der Grundkörper in diesem Bereich besonders geeignet, äußere Kräfte sowohl mit einem radialen Anteil als auch mit einem axialen Anteil aufzunehmen. Äußeren Kräfte mit diesen beiden Anteilen treten insbesondere beim taktilen Vermessen der Kalibrier-Kugelelemente auf.

Die Außenfläche des Grundkörpers bildet eine geschlossene Fläche, unbeschadet von etwaigen Bohrungen in die Außenfläche bzw. den Grundkörper hinein, die mit Steckstiften zur Kugelhalterung verschlossen sind (siehe unten). Etwaige äußere Kräfte werden entsprechend über den vollen Umfang des Grundkörpers und über die axiale Länge des Grundkörpers zumindest im Bereich der Außenfläche verteilt.

Insgesamt weist der Grundkörper daher eine hohe mechanische Steifigkeit auf, und ist durch äußere Kräfte nur schwer zu verformen.

An dem Grundkörper sind die Kalibrier-Kugelelemente im Bereich der Außenfläche verteilt befestigt. Dazu sitzen die Kalibrier-Kugelelemente entweder unmittelbar auf dem Grundkörper bzw. der nach radial außen gerichteten Außenfläche auf (etwa in einer Vertiefung in der Außenfläche), oder sie sind in unmittelbarer Nähe vor der nach radial außen gerichteten Außenfläche am Grundkörper befestigt (typischerweise in einem Abstand A gleich oder kleiner dem 2-fachen Durchmesser D der Kalibrier-Kugelelemente, etwa mit einem Steckstift, siehe unten).

Etwaige mechanische Belastungen einer taktilen Koordinatenmessmaschine auf die Kalibrier-Kugelelemente werden praktisch direkt in den Grundkörper eingeleitet führen dann zu keiner merklichen mechanischen Verformung am Kalibriernormal. Die Kraft der taktilen Koordinatenmessmaschine wird vom Grundkörper mit hoher mechanischer Stabilität bestmöglich aufgenommen und über den Grundkörper abgeleitet. Die (relative) Position der Kalibrier-Kugelelemente wird nicht oder jedenfalls nicht merklich während einer taktilen Vermessung durch die Koordinatenmessmaschine verändert. Entsprechend können die wahren Maße des Grundkörpers, wie sie auch während einer späteren (mechanisch nicht belastenden) röntgenographischen Vermessung in einer ICT-Apparatur vorliegen werden, ermittelt werden.

Da sich der Grundkörper im Bereich der Außenfläche entlang der Längsachse verjüngt, kann auf einfache Weise eingerichtet werden, dass die Kalibrier-Kugelelemente sich sowohl über eine Vielzahl von axialen Positionen als auch über eine Vielzahl von radialen Positionen verteilen. Dadurch ist sichergestellt, dass das Messvolumen der ICT-Apparatur sowohl über einen gewissen axialen Bereich als auch über einen gewissen radialen Bereich auf Abbildungsfehler, insbesondere Verzerrungen, zuverlässig und im Wesentlichen durchgängig überprüft werden kann.

Der umlaufende Grundkörper ist auch in einem Computertomographen einfach und schnell zu vermessen; insbesondere erfordert ein solcher Grundkörper für die Rekonstruktion der 3D-Röntgendichteverteilung nur vergleichsweise wenig Rechenleistung. Dies gilt besonders im Falle eines als Hohlkörper ausgebildeten, rotationssymmetrischen Grundkörpers mit einheitlicher Wandstärke im Bereich der Außenfläche.

Gemäß der Erfindung ist vorgesehen, dass das Kalibriernormal weiterhin eine Grundplatte aufweist, insbesondere wobei die Grundplatte ganz oder überwiegend aus Metall gefertigt ist, und dass an einer Oberseite der Grundplatte der Grundkörper befestigt ist, insbesondere angeklebt ist. Der Aufbau mit Grundplatte und Grundkörper ermöglicht auf einfache Weise den Einsatz unterschiedlicher Materialien für die Grundplatte (meist ganz oder überwiegend aus Metall) und des Grundkörpers (bevorzugt ein wenig dichtes/wenig röntgenabsorbierendes Material wie Kohlefaserverbund oder ein Kunststoff oder eine Keramik). Die Grundplatte, insbesondere aus Metall, ermöglicht eine stabile und robuste Befestigung des Grundkörpers, insbesondere auf einer Koordinatenmessmaschine (oder auf einer ICT-Apparatur), oder auch eine stabile Befestigung einer Haubenanordnung.

Die Erfindung sieht weiterhin vor, dass an einer Unterseite der Grundplatte ein Dreipunkt-Lager und ein Haltemagnet ausgebildet sind. Durch das Dreipunktlager und den Haltemagnet sind eine besonders spannungsarme Befestigung des Kalibriernormals auf einer taktilen Koordinatenmessmaschine (oder auch auf einer ICT-Apparatur) möglich. Entsprechend kann ein Eintrag von elastischen Spannungen, die die Geometrie des Kalibriernormals verzerren könnten, minimiert werden.

Ein jeweiliges Kalibrier-Kugelelement besteht aus einer vollständigen Kalibrierkugel oder einem Teilstück einer vollständigen Kalibrierkugel. Ein jeweiliges Kalibrier-Kugelelement exponiert einen konvexen, kugelförmig gekrümmten Flächenabschnitt vor der Außenfläche.

Die Kalibrier-Kugelelemente weisen typischerweise eine Rundheit von Grade 05 oder besser auf (gemäß DIN 5401, ISO 3290). Bevorzugt beträgt die Rundheitsabweichung der Kalibrier-Kugelelemente 0,13 µm oder weniger. Typischerweise sind die Kalibrier-Kugelelemente aus Rubin oder einem anderen keramischen Material gefertigt. Die Größe und die Menge der Kalibrier-Kugelelemente kann abhängig vom Anwendungsfall und der gewünschten Größe des Kalibriernormals gewählt werden. In der Regel weist das Kalibriernormal wenigstens sechs, bevorzugt wenigstens acht, Kalibrier-Kugelelemente auf.

Der Grundkörper kann über die Außenfläche hinaus, in deren (axialem) Bereich er sich verjüngt, weitere Außenflächen besitzen, beispielsweise axial unterhalb der Außenfläche eine weitere Außenfläche, in deren (axialem) Bereich der Grundkörper zylindrisch ausgebildet ist.

### Bevorzugte Ausführungsformen der Erfindung

### Ausführungsformen betreffend den Grundkörper

Bevorzugt ist eine Ausführungsform des erfindungsgemäßen Kalibriernormals, bei der der Grundkörper sich im Bereich der Außenfläche entlang der Längsachse kontinuierlich verjüngt. Durch eine kontinuierliche Verjüngung (ohne Sprünge im äußeren Radius) kann eine mechanisch besonders hohe Stabilität des Grundkörpers erreicht werden, und auch ein materialsparender Aufbau des Grundkörpers erreicht werden. Bevorzugt verjüngt sich der Grundkörper im Bereich der Außenfläche entlang der Längsachse kontinuierlich in linearer Weise. Dies ist konstruktiv besonders einfach.

Besonders bevorzugt ist eine Ausführungsform, bei der der Grundkörper zumindest im Bereich der Außenfläche bezüglich der Längsachse rotationssymmetrisch ist.

Dies ist konstruktiv besonders einfach, und vermeidet Änderungen der Durchstrahlung von Material des Grundkörpers bei der Drehung des Kalibriernormals, wodurch die Vermessung des Kalibriernormals in der ICT-Apparatur vereinfacht wird.

Bei einer bevorzugten Weiterbildung dieser Ausführungsform ist der Grundkörper zumindest im Bereich der Außenfläche kegelförmig ausgebildet. Dies sorgt für eine günstige, verformungsarme Krafteinleitung in den Grundkörper bei typischen taktilen Koordinatenmessmaschinen und ist fertigungstechnisch einfach. Es wird eine besonders hohe mechanische Steifigkeit des Grundkörpers erreicht. Zudem können mit der Kegelform bei einer einheitlichen Wandstärke des Grundkörpers zumindest in einem achsnahen Bereich näherungsweise konstante zu durchstrahlende Wandstärken (Materialdicken) des Grundkörpers über einen weiten axialen Bereich eingerichtet werden, wodurch eine besonders präzise Vermessung des Kalibriernormals bzw. des Messvolumens einer ICT-Apparatur ermöglicht wird. Die Außenfläche entspricht bei dieser Bauform zumindest einem Teil der Mantelfläche eines Kegels. Bevorzugt beträgt der Kegelwinkel zwischen 30° und 60°, besonders bevorzugt zwischen 35° und 55°, ganz besonders bevorzugt ca. 45°.

Bei einer alternativen Weiterbildung der obigen Ausführungsform ist vorgesehen, dass der Grundkörper zumindest im Bereich der Außenfläche entsprechend einem Teil einer Kugelfläche ausgebildet ist. Auch mit dieser Bauform kann das Kalibriernormal bzw. das Messvolumen einer ICT-Apparatur präzise auf Verzerrungen überprüft werden.

Bei einer anderen Ausführungsform weist der Grundkörper zumindest im Bereich der Außenfläche bezüglich der Längsachse eine Drehsymmetrie mit der Längsachse als N-zähliger Drehachse auf, mit N≥6. Auch mit einer solchen Bauform eines Kalibriernormals kann das Messvolumen einer ICT-Apparatur auf Abbildungsfehler überprüft werden.

Besonders bevorzugt ist eine Ausführungsform, die vorsieht, dass zumindest für eine Mehrzahl der Kalibrier-Kugelelemente gilt, dass in einem axialen Intervall, in welchem sich ein jeweiliges Kalibrier-Kugelelement entlang der Längsachse erstreckt, sich keine weiteren Kalibrier-Kugelelemente erstrecken, insbesondere wobei für alle Kalibrier-Kugelelemente gilt, dass in einem axialen Intervall, in welchem sich ein jeweiliges Kalibrier-Kugelelement entlang der Längsachse erstreckt, sich keine weiteren Kalibrier-Kugelelemente erstrecken. Mit anderen Worten, in axialer Richtung überlappen die Kalibrier-Kugelelemente nicht (unabhängig von der Drehposition). Bei Röntgenaufnahmen des Kalibriernormals mit im Wesentlichen radialer Röntgenstrahlungs-Ausbreitungsrichtung und Drehung um die Längsachse des Kalibriernormals werden die Kalibrier-Kugeln stets einzeln durchstrahlt. Dies vermeidet Verzerrungen oder Abbildungsfehler durch sich in Ausbreitungsrichtung überlagernde Kalibrier-Kugelelemente, die bei der Berechnung der 3D-Röntgendichte des Kalibriernormals eine Erschwernis darstellen können.

Besonders bevorzugt ist eine Weiterbildung, bei der auch in axialer Richtung vor und hinter diesem axialen Intervall jeweils in einem axialen Nachbarintervall sich keine weiteren Kalibrier-Kugelelemente erstrecken, insbesondere wobei ein jeweiliges Nachbarintervall eine axiale Länge NIL aufweist, für die gilt NIL ≥ 0,2*RKK, mit RKK: Krümmungsradius des jeweiligen Kalibrier-Kugelelements. Dadurch wird eine präzise Abbildung des Kalibriernormals in einer ICT-Apparatur weiter erleichtert.

Besonders bevorzugt ist eine Ausführungsform, bei der zumindest ein Teil der Kalibrier-Kugelelemente, die auf der Außenfläche des Grundkörpers verteilt angeordnet sind, gemäß einer Spirale angeordnet sind, bevorzugt wobei in der Spirale aufeinanderfolgende Kalibrier-Kugelelemente jeweils einen gleichen Abstand entlang der Längsachse zueinander aufweisen und um gleiche Drehwinkel um die Längsachse herum zueinander versetzt sind. Beispielsweise sind alle Kalibrier-Kugelelemente in lediglich einer Spirale angeordnet. Es ist auch möglich, einen Teil der Kalibrier-Kugelelemente oder alle Kalibrier-Kugelelemente in mehreren Spiralen anzuordnen, die gegeneinander versetzt sind, typischerweise sowohl um einen gewissen Drehwinkel um die Längsachse, als auch um einen gewissen Abstand entlang der Längsachse (letzteres um einen axialen Überlapp der einzelnen Kalibrier-Kugelelemente zu vermeiden). Durch die Verjüngung des Grundkörpers im Bereich der Außenfläche entlang der Längsachse variiert bei den Kalibrier-Kugelelementen in einer Spiral-Anordnung um die Längsachse sowohl die radiale Position als auch die axiale Position. Mit der Spiral-Anordnung kann daher auf einfache Weise sowohl ein größeres radiales Intervall als auch ein größeres axiales Intervall des Messvolumens der ICT-Apparatur auf Verzerrungen zuverlässig und praktisch durchgehend untersucht werden.

Vorteilhaft ist eine Ausführungsform, bei der der Grundkörper als ein Hohlkörper ausgebildet ist. Dies spart Material und vermindert die Röntgenabsorption durch den Grundkörper, was wiederum die Vermessung des Kalibriernormals in der ICT-Apparatur vereinfacht. Bevorzugt ist der Hohlkörper zu dem Ende hin, zu dem sich der Grundkörper entlang der Längsachse verjüngt, geschlossen ausgebildet; dies verbessert die mechanische Stabilität des Grundkörpers.

Bei einer bevorzugten Weiterbildung dieser Ausführungsform ist eine Wandstärke des Grundkörpers im Bereich der Außenfläche entlang der Längsachse konstant. Die (lokale) Wandstärke ist die (lokale) Dicke des (hohlen) Grundkörpers gemessen senkrecht zur (lokalen) Außenfläche. Durch die konstante Wandstärke kann im Fall einer kegelförmigen Außenfläche zumindest in einem Bereich nahe der Längsachse für die Kalibrier-Kugelelemente eine annähernd gleiche Dicke an Material des Grundkörpers in Überlapp mit einem jeweiligen Kalibrier-Kugelelement erreicht werden, und damit sehr ähnliche Abbildungsverhältnisse für alle Kalibrier-Kugelelemente in dem Bereich nahe der Längsachse. Dadurch kann die Kalibrierung der ICT-Apparatur im Messvolumen nahe der Längsachse (die meist der Drehachse des Computertomographen entspricht) besonders genau und zuverlässig erfolgen.

Eine alternative Weiterbildung der obigen Ausführungsform sieht vor, dass eine Wandstärke des Grundkörpers im Bereich der Außenfläche entlang der Längsachse sich in derjenigen Richtung, entlang der sich der Grundkörper verjüngt, zunimmt. In den Bereichen weiter entfernt von der Längsachse ist tendenziell umso mehr Material des Grundkörpers in Überlapp mit einem Kalibrier-Kugelelement, je größer der lokale Radius ist. Durch Erhöhung der Wandstärke zur Verjüngung hin kann im Mittel die Dicke an Material in Überlapp mit einem jeweiligen Kalibrier-Kugelelement vergleichmäßigt werden, wodurch die Abbildungsverhältnisse im Mittel vergleichmäßigt werden können. Dadurch kann die Kalibrierung des Computertomographen im Messvolumen weiter entfernt von der Längsachse (die meist der Drehachse des Computertomographen entspricht) besonders genau und zuverlässig erfolgen.

Vorteilhaft ist eine Ausführungsform, bei der in die Außenfläche des Grundkörpers Vertiefungen, insbesondere sphärische Vertiefungen, eingebracht sind, in die die Kalibrier-Kugelelemente eingesetzt sind. In diesem Fall sind die Kalibrier-Kugelelemente typischerweise als vollständige Kalibrierkugeln ausgebildet. Dieser Aufbau ist baulich einfach und mechanisch besonders stabil. Man beachte, dass typischerweise die Tiefe der Vertiefungen (senkrecht zur lokalen Außenfläche) maximal 1/3 des Durchmessers der Kalibrier-Kugelelemente entspricht. Die Kalibrier-Kugelelemente werden typischerweise in den Vertiefungen eingeklebt. Im Falle von sphärischen Vertiefungen entspricht der Krümmungsradius der Vertiefungen dem Krümmungsradius der Kalibrier-Kugelelemente, und es kann ein besonders sicherer Sitz erreicht werden. Alternativ können auch beispielsweise konische Vertiefungen vorgesehen sein.

Bei einer ebenfalls vorteilhaften Ausführungsform ist vorsehen, dass die Kalibrier-Kugelelemente jeweils an Steckstiften befestigt sind, die jeweils an einem stirnseitigen Ende eine Vertiefung, insbesondere sphärische Vertiefung, aufweisen, in die ein jeweiliges Kalibrier-Kugelelement eingesetzt ist, und die jeweils mit einem anderen Ende in eine jeweilige Bohrung an der Außenfläche des Grundkörpers eingesetzt sind, wobei der Steckstift mit einem Teilabschnitt gegenüber der Außenfläche hervorsteht. Durch die Steckstifte kann eine verbesserte Zugänglichkeit der Kalibrier-Kugelelemente für einen mechanischen Fühler einer taktilen Koordinatenmessmaschine erreicht werden. Die Kalibrier-Kugelelemente sind typischerweise als vollständige Kugeln ausgebildet, die in den bevorzugt sphärischen Vertiefungen sitzen. Man beachte, dass die Steckstifte typischerweise eine gegenüber der Außenfläche hervorstehende (größte) Länge L aufweisen, die maximal dem doppelten Durchmesser D der Kalibrier-Kugelelemente entspricht; dadurch werden Momente bzw. Hebellängen beim taktilen Vermessen der Kalibrier-Kugelelemente gering gehalten. Die Steckstifte sind typischerweise senkrecht zur lokalen Außenfläche ausgerichtet. Die Steckstifte sind zudem typischerweise (zumindest mit einer Richtungskomponente) nach radial außen gerichtet.

Bevorzugt ist eine Ausführungsform, bei der der Grundkörper aus einem Kohlefaser-Verbundwerkstoff gefertigt ist. Dieses Material ist für den Grundkörper bietet eine hohe mechanische Stabilität bei gleichzeitig relativ geringer Röntgenabsorption (insbesondere im Vergleich zu den meisten Metallen) und ist auch über lange Zeiten (mehrere Jahre) formstabil. Die Kohlefasern sind typischerweise in eine Matrix aus Epoxidharz eingebettet. Ein Grundkörper aus Kohlefaser-Verbundwerkstoff kann insbesondere in einer Spritzgussform geformt werden.

### Ausführungsformen betreffend die Grundplatte und eine Haubenanordnung

Bevorzugt ist weiterhin eine Ausführungsform des erfindungsgemäßen Kalibriernormals, die vorsieht,
dass die Grundplatte ganz oder überwiegend aus Metall gefertigt ist,
und/oder dass an der Oberseite der Grundplatte der Grundkörper angeklebt ist.

Bevorzugt ist eine Ausführungsform, die vorsieht, dass das Kalibriernormal weiterhin eine Haubenanordnung umfasst, die an der Oberseite der Grundplatte auf die Grundplatte aufschraubbar ist, wobei die Haubenanordnung im Bereich ihrer Unterseite ein Haubengewinde, insbesondere ein Innengewinde, ausbildet und die Grundplatte ein dazu passendes Grundplattengewinde, insbesondere Außengewinde, ausbildet, und dass die Haubenanordnung im aufgeschraubten Zustand zusammen mit der Grundplatte den Grundkörper vollständig abdeckt. Mit der Haubenanordnung kann das Kalibriernormal geschützt werden, insbesondere vor plastischen Verformungen oder Materialabbrüchen, so dass das Kalibriernormal nach seiner initialen taktilen Vermessung seine Geometrie (also seine vorbekannten Maße) exakt beibehält. Die Befestigung der Haubenanordnung auf der Grundplatte durch Aufschrauben ist besonders spannungsarm, so dass durch die (nach dem taktilen Vermessen des Kalibriernormals erfolgende) Anbringung der Haubenanordnung keine merklichen (elastischen oder gar plastichen) Verformungen des Kalibriernormals eintreten. Insbesondere können großflächige Gewinde zur Minimierung von mechanischen Spannungen eingesetzt werden.

Vorteilhaft ist eine Weiterbildung dieser Ausführungsform, die vorsieht, dass die Haubenanordnung einen Basisring aufweist, an welchem das Haubengewinde ausgebildet ist, insbesondere wobei der Basisring ganz oder überwiegend aus Metall gefertigt ist, und dass die Haubenanordnung einen Haubenbecher aufweist, der im Bereich einer Oberseite des Basisrings befestigt ist, insbesondere angeklebt ist, insbesondere wobei der Haubenbecher zumindest teilweise aus einem transparenten Material und/oder aus Kunststoff gefertigt ist, bevorzugt aus einem transparenten Kunststoff. Durch die Unterteilung der Haubenanordnung in einen Basisring und einen Haubenbecher können für die jeweiligen Anforderungen besonders gut geeignete Materialien eingesetzt werden. Der Haubenbecher kann schwimmend auf dem Basisring befestigt werden, bevorzugt durch Kleben, was die Einbringung von mechanischen Spannungen in den Basisring minimiert. Der Basisring aus Metall kann eine sehr robuste und zuverlässige Gewindebefestigung sicherstellen, und der Haubenbecher kann aus einem wenig röntgenabsorbierenden, aber mechanisch ausreichend schützenden Material wie Kunststoff (insbesondere Polymethylmethacrylat) gefertigt werden. Im Falle eines transparenten Haubenbechers kann der Anwender (ohne den Haubenbecher zu öffnen) leicht erkennen, welches Kalibriernormal von dem Haubenbecher geschützt wird. Eine Befestigung des Haubenbechers auf dem Basisring durch Aufkleben ist besonders spannungsarm.

Bei einer bevorzugten Ausführungsform ist vorgesehen, dass das Dreipunkt-Lager drei Paare von Lagerkugeln oder drei Hartmetallrollen umfasst, die an der Unterseite der Grundplatte befestigt sind, insbesondere angeklebt sind, und dass der Haltemagnet mittig zwischen den Lagerkugeln oder Hartmetallrollen an der Unterseite der Grundplatte befestigt ist, insbesondere angeschraubt ist. Dieser Aufbau hat sich in der Praxis bewährt und kann einen besonders festen Sitz der Grundplatte auf einem entsprechenden Gegenlager sicherstellen. Die Paare von Lagerkugeln oder Hartmetallrollen befinden sich typischerweise bei einer einheitlichen radialen Position. Der Haltemagnet kann beispielsweise durch eine Ronde ausgebildet sein.

Bei einer Weiterbildung dieser Ausführungsform ist der Haltemagnet durch eine Ronde ausgebildet.

### Kalibriernormal-System mit Adapterplatte

In den Rahmen der vorliegenden Erfindung fällt auch ein Kalibriernormal-System, umfassend ein erfindungsgemäßes Kalibriernormal mit Dreipunkt-Lager und Haltemagnet an der Unterseite der Grundplatte wie oben beschrieben sowie eine Adapterplatte, wobei an einer Oberseite der Adapterplatte ein Dreipunkt-Gegenlager und ein Gegen-Haltemagnet ausgebildet sind, entsprechend einem Positionsbild des Dreipunkt-Lagers und des Haltemagneten der Grundplatte des Kalibriernormals, und wobei die Adapterplatte weiterhin im Bereich ihrer Unterseite einen Spannzapfen zum Einspannen in ein Spannlager einer Koordinatenmessmaschine ausbildet. Mittels der Adapterplatte ist es möglich, eine Befestigung des Kalibriernormals an einem üblichen Spannlager einer (taktilen) Koordinatenmessmaschine vorzunehmen, ohne dass elastische Spannungen in das Kalibriernormal eingetragen werden; entsprechend bleibt die Geometrie des Kalibriernormals vom Spannlager unbeeinflusst. Das Spannlager kann zuverlässig einen ausreichen sicheren mechanischen Halt des Kalibriernormal-Systems auf der Koordinatenmessmaschine für die taktile Vermessung herstellen. Mit diesem Aufbau ist also eine spannungsfreie Fixierung des Kalibriernormals auf dem klemmenden Spannsystem einer taktilen Koordinatenmessmaschine möglich. Das Dreipunkt-Gegenlager kann drei Hartmetallrollen oder drei Paare von Lagerkugeln umfassen, die an der Oberseite der Adapterplatte befestigt sind, insbesondere angeklebt sind. Die Hartmetallrollen oder Paare von Lagerkugeln befinden sich typischerweise bei einer einheitlichen radialen Position. Weiterhin kann der Gegen-Haltemagnet mittig zwischen den Lagerkugeln oder Hartmetallrollen an der Oberseite der Adapterplatte befestigt sein, insbesondere angeschraubt oder aufgeklebt sein.

### Verwendungen eines Kalibriernormal-Systems

In den Rahmen der vorliegenden Erfindung fällt auch die Verwendung eines erfindungsgemäßen, oben beschriebenen Kalibriernormal-Systems, mit folgenden Schritten:
Schritt a) in beliebiger Reihenfolge werden das Kalibriernormal auf der Adapterplatte über das Dreipunkt-Lager, das Dreipunkt-Gegenlager, den Haltemagneten und den Gegen-Haltemagneten aneinander befestigt, und die Adapterplatte wird mit dem Spannzapfen in einem Spannlager einer Koordinatenmessmaschine befestigt;
Schritt b) geometrische Maße des Kalibriernormals werden mit der Koordinatenmessmaschine taktil vermessen;
Schritt c) das Kalibriernormal wird von der Adapterplatte entfernt;
Schritt d) das Kalibriernormal wird zu einem industriellen Computertomographen verbracht;
Schritt e) geometrische Maße des Kalibriernormals werden mit dem industriellen Computertomographen röntgenographisch vermessen, wobei das Kalibriernormal um eine Drehachse des Computertomographen, die parallel zur Längsachse des Kalibriernormals verläuft, gedreht wird;
Schritt f) die röntgenographisch vermessenen geometrischen Maße des Kalibriernormals und die taktil vermessenen geometrischen Maße des Kalibriernormals werden miteinander verglichen, um die Funktion des industriellen Computertomographen zu überprüfen und/oder um den industriellen Computertomographen zu justieren. Bei diesem Vorgehen können die geometrischen Maße des Kalibriernormals praktisch spannungsfrei auf der Koordinatenmessmaschine taktil vermessen werden, obwohl die Koordinatenmessmaschine ein Spannlager anwendet. Die taktil gemessenen Maße stimmen dann mit den tatsächlichen Maßen des Kalibriernormals während der röntgenographischen Vermessung des Kalibriernormals sehr genau überein, und die Abbildungsgenauigkeit der ICT-Apparatur kann mit hoher Präzision überprüft oder nachjustiert werden. Typischerweise werden die Schritte a) bis d) lediglich einmalig durchgeführt, und die Schritte e) und f) werden regelmäßig an dem Computertomographen wiederholt. Man beachte, dass eine Adapterplatte für eine Vielzahl von Kalibriernormalen bei deren taktiler Vermessung einsetzbar ist. Die geometrischen Maße umfassen typischerweise Abstände der Mittelpunkte der Kalibrier-Kugelelemente (bzw. von Paaren von Mittelpunkten der Kalibrier-Kugelelemente) des Kalibriernormals.

Bei einer bevorzugten Variante der erfindungsgemäßen Verwendung des Kalibriernormalsystems ist vorgesehen, dass das Kalibriernormal weiterhin ausgebildet ist mit einer auf die Grundplatte aufschraubbaren Haubenanordnung, dass in Schritt b) die Haubenanordnung abgeschraubt ist, dass nach Schritt b) und vor Schritt d) die Haubenanordnung aufgeschraubt wird, und dass in Schritt e) die Haubenanordnung aufgeschraubt ist. Das Kalibriernormal wird ohne die Haubenanordnung taktil vermessen, und danach wird durch die aufgeschraubte Haubenanordnung das Kalibriernormal vor äußeren Einflüssen, insbesondere unbeabsichtigter plastischer Verformung, geschützt. Dadurch kann die Überprüfung der ICT-Apparatur mit besonders hoher Zuverlässigkeit erfolgen.

In einer bevorzugten Weiterentwicklung dieser Variante ist vorgesehen, dass im aufgeschraubten Zustand der Haubenanordnung ein Teil der Haubenanordnung, insbesondere eine erste, radial äußere, umlaufende Fläche, und ein Teil der Grundplatte, insbesondere eine zweite, radial äußere, umlaufende Fläche, an einer Kontaktfläche aneinander anschließen, insbesondere bündig aneinander anschließen, dass nach Schritt b) und vor Schritt d), nachdem die Haubenanordnung aufgeschraubt wurde, ein Siegel auf diesen beiden Teilen der Haubenanordnung und der Grundplatte aufgebracht wird, welches die Kontaktfläche übergreift, und dass vor Schritt e) verifiziert wird, dass das Siegel unbeschädigt ist. Durch das Siegel kann sichergestellt werden, dass die Haubenanordnung zwischenzeitlich nicht versehentlich oder unbefugt entfernt wurde. Bei unbeschädigtem Siegel (und unbeschädigter Haubenanordnung) ist dann sichergestellt, dass das Kalibriernormal nicht bei abgenommener Haubenanordnung (unbemerkt) verformt wurde. Dadurch kann die Zuverlässigkeit der Überprüfung der ICT-Apparatur weiter erhöht werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Fig. 1 zeigt eine schematische Explosionsdarstellung einer ersten Ausführungsform eines erfindungsgemäßen Kalibriernormals, von schräg oben, wobei der Grundkörper sich im Bereich einer Außenfläche kegelförmig verjüngt;
Fig. 2 zeigt eine schematische Explosionsdarstellung der ersten Ausführungsform des Kalibriernormals von Fig. 1, von schräg unten;
Fig. 3 zeigt eine schematische Ansicht des ersten Ausführungsform des Kalibriernormals von Fig. 1 im zusammengesetzten Zustand, von schräg oben, ohne den Haubenbecher;
Fig. 4 zeigt eine schematische Ansicht des ersten Ausführungsform des Kalibriernormals von Fig. 1 im zusammengesetzten Zustand, von schräg unten, ohne den Haubenbecher;
Fig. 5 zeigt einen schematischen Längsschnitt durch die erste Ausführungsform des Kalibriernormals von Fig. 1, ohne Grundplatte und ohne Haubenanordnung;
Fig. 6 zeigt eine schematische Seitenansicht der ersten Ausführungsform des Kalibriernormals von Fig. 1, ohne Grundplatte und ohne Haubenanordnung;
Fig. 7 zeigt eine schematische Aufsicht der ersten Ausführungsform des Kalibriernormals von Fig. 1, ohne Grundplatte und ohne Haubenanordnung;
Fig. 8 zeigt eine schematische Ansicht einer zweiten Ausführungsform eines erfindungsgemäßen Kalibriernormals, von schräg oben, wobei der sich verjüngende Grundkörper im Bereich der Außenfläche einen hexagonalen Querschnitt aufweist;
Fig. 9 zeigt einen schematischen Längsschnitt durch eine dritte Ausführungsform eines erfindungsgemäßen Kalibriernormals, wobei der sich verjüngende Grundkörper im Bereich der Außenfläche sphärisch ausgebildet ist;
Fig. 10 zeigt einen schematischen Längsschnitt durch eine vierte Ausführungsform eines erfindungsgemäßen Kalibriernormals, wobei der sich verjüngende Grundkörper im Bereich der Außenfläche kegelförmig ausgebildet ist, und wobei die Kalibrier-Kugelelemente auf Stützstiften angeordnet sind;
Fig. 11 zeigt eine schematische Ansicht einer beispielhaften Adapterplatte für ein erfindungsgemäßes Kalibriernormal-System, von schräg oben;
Fig. 12 zeigt eine schematische Ansicht der Adapterplatte von Fig. 11, von schräg unten;
Fig. 13a illustriert schematisch eine beispielhafte Verwendung eines Kalibriernormals gemäß der Erfindung, in einem Schritt a), wobei das Kalibriernormal auf einer Adapterplatte befestigt wird, und wobei die Adapterplatte auf einer Koordinatenmessmaschine befestigt wird;
Fig. 13b illustriert schematisch die Verwendung von Fig. 13a, in einem Schritt b), wobei das Kalibriernormal taktil vermessen wird;
Fig. 13c illustriert schematisch die Verwendung von Fig. 13a, in einem Schritt c), wobei das Kalibriernormal von der Adapterplatte entfernt wird;
Fig. 13d illustriert schematisch die Verwendung von Fig. 13a, in einem Schritt d), wobei das Kalibriernormal einschließlich einer Haubenanordnung auf einer ICT-Apparatur angeordnet wird;
Fig. 13e illustriert schematisch die Verwendung von Fig. 13a, in einem Schritt e), wobei das Kalibriernormal röntgenographisch vermessen wird;
Fig. 13f illustriert schematisch die Verwendung von Fig. 13a, in einem Schritt f), wobei die taktil vermessenen Maße und die röntgenographisch vermessenen Maße des Kalibriernormals miteinander verglichen werden.

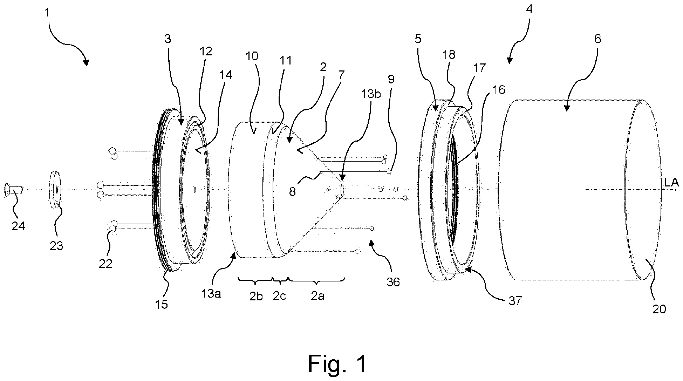

Die Figuren 1 bis 7 illustrieren schematisch eine beispielhafte erste Ausführungsform eines erfindungsgemäßen Kalibriernormals 1.

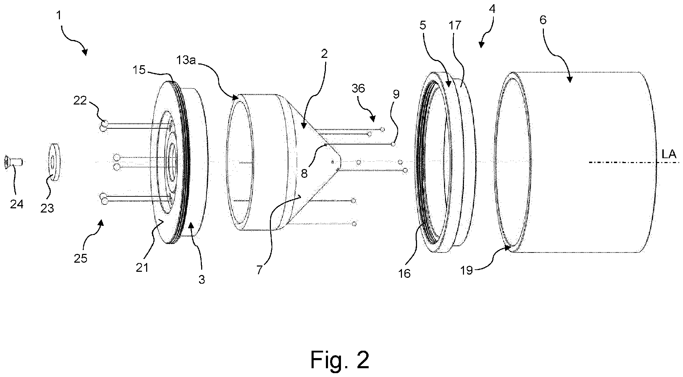

Wie am besten aus den Explosionsdarstellungen von **Fig. 1** und **Fig. 2** ersichtlich, umfasst das Kalibriernormal 1 einen Grundkörper 2, der in der gezeigten Ausführungsform mit seinem unteren/hinteren Ende 13a (in Fig. 1 und Fig. 2 linksseitig) auf einer Grundplatte 3 befestigt ist. Der Grundkörper 2 kann mit einer Haubenanordnung 4 abgedeckt werden, welche einen Basisring 5 aufweist, auf dem ein Haubenbecher 6 befestigt ist. Das Kalibriernormal 1 erstreckt sich entlang einer Längsachse LA.

Der Grundkörper 2 weist einen vorderen/oberen Teilbereich 2a auf, in welchem der Grundkörper 2 hier kegelförmig ausgebildet ist. Der Kegelwinkel beträgt hier 45° (siehe dazu auch Fig. 6). In diesem Teilbereich 2a weist der Grundkörper eine Außenfläche 7 auf, die (mit einer Richtungskomponente ihrer jeweiligen lokalen Flächennormalen) nach radial außen gerichtet ist, und auf der in Vertiefungen 8 Kalibrier-Kugelelemente 9 eingesetzt und befestigt sind, hier aufgeklebt sind. Die Vertiefungen 8 sind hier sphärisch gerundet. Insgesamt sind in der gezeigten Ausführungsform acht Vertiefungen 8 und acht Kalibrier-Kugelelemente 9 vorgesehen. Die Kalibrier-Kugelelemente 9 sind hier als Rubinkugeln mit einer Rundheit von Grade 05 ausgebildet. Die Vertiefungen 8 und Kalibrier-Kugelelemente 9 sind hier zudem in Form einer Spirale 36 auf der kegelförmigen Außenfläche 7 angeordnet.

In der gezeigten Ausführungsform weist der Grundkörper 2 weiterhin einen hinteren/unteren Teilbereich 2b auf, der im Wesentlichen zylinderförmig ausgebildet ist. Auf der zugehörigen, weiteren Außenfläche 10 dieses Teilbereichs 2b sind keine Kalibrier-Kugelelemente angeordnet. Zwischen dem hinteren Teilbereich 2b und dem vorderen Teilbereich 2a ist hier zudem ein abgerundeter Übergangsbereich 2c vorgesehen, auf dessen weiterer Außenfläche 11 ebenfalls keine Kalibrier-Kugelelemente angeordnet sind.

Der Grundkörper 2 ist (unbeschadet der Vertiefungen 8) bezüglich der Längsachse LA rotationssymmetrisch. Im Bereich der Außenfläche 7 verjüngt sich der Grundkörper kontinuierlich und linear, entsprechend seiner konischen Form.

Wie aus Fig. 2 (und auch Fig. 5) gut ersichtlich, ist der der Grundkörper 2 hohl ausgebildet, wobei der Grundkörper 2 zu seinem hinteren Ende 13a hin offen ausgebildet ist (aber durch die Grundplatte 3 verschlossen wird), und zu seinem vorderen, hier abgestumpften Ende 13b hin geschlossen ausgebildet ist. Der Grundkörper 2 ist aus einem faserverstärkten Verbundwerkstoff gefertigt. Die Orientierung der Fasern (meist Kohlefasern) kann für erwartete mechanische Belastungen optimiert werden. In vielen Fällen ist eine Orientierung der Fasern in einem Geflecht von Vorteil, wobei ein Teil der Fasern in Umfangsrichtung verläuft. Typischerweise weist der Verbundwerkstoff eine Matrix aus Epoxidharz auf.

Die Grundplatte 3 weist in der gezeigten Ausführungsform an seiner Oberseite 14 eine Ringnut 12 auf, in die das hintere Ende 13a des Grundkörpers 2 eingesetzt und verklebt ist. Weiterhin ist an der radialen Außenseite der Grundplatte 3 ein Grundplattengewinde 15 in Form eines Außengewindes ausgebildet.

Am Basisring 5 der Haubenanordnung 4 ist dazu passendes Haubengewinde 16 in Form eines Innengewindes ausgebildet. Dadurch kann die Haubenanordnung 4 von der Seite der Oberseite 14 auf die Grundplatte 3 aufgeschraubt werden; typischerweise sind dafür die Grundplatte 3 und der Basisring 5 aus Metall, beispielsweise Edelstahl, gefertigt. Der Haubenbecher 6 ist hier aus einem transparenten Kunststoff, etwa Polymethylmethacrylat, gefertigt. Dadurch ist der Grundkörper 2 auch bei aufgeschraubter Haubenanordnung 4 mit bloßem Auge gut sichtbar, und zudem für Röntgenstrahlung gut erreichbar.

Der Haubenbecher 6 ist mit seinem hinteren, offenen Ende 19 auf einen ringförmigen Basisring-Stutzen 17 aufgeschoben und sitzt auf einer Schulter 18 des Basisrings 5 auf der Oberseite 37 des Basisrings 5 auf; in dieser Position ist der Haubenbecher 6 auf dem Basisring 5 aufgeklebt. In der gezeigten Ausführungsform ist der Haubenbecher 6 zylindrisch ausgebildet. An seinem vorderen Ende 20 ist der Haubenbecher 6 geschlossen ausgebildet.

Der Haubenbecher 6 kann bei auf der Grundplatte 3 aufgeschraubter Haubenanordnung 4 den Grundkörper 2 und die Kalibrier-Kugelelemente 9 vor mechanischen Einflüssen, insbesondere Verformungen und Beschädigungen, schützen.

Wie wiederum vor allem aus Fig. 2 ersichtlich ist, ist an der Unterseite der Grundplatte 3 ein Dreipunkt-Lager 25 mittels drei Paaren von Lagerkugeln 22 ausgebildet. Die Lagerkugelpaare sind um die Längsachse LA herum und gegeneinander um 120° versetzt angeordnet. Zentral zwischen den Lagerkugeln 22 ist ein Haltemagnet 23 an der Unterseite 21 aufgeschraubt. Der Haltemagnet 23 hat hier die Form einer Ronde, mit einer flachen magnetischen Scheibe, durch die eine Bohrung für einen Durchgriff einer Befestigungsschraube 24 verläuft, die in die Grundplatte 3 eingeschraubt ist.

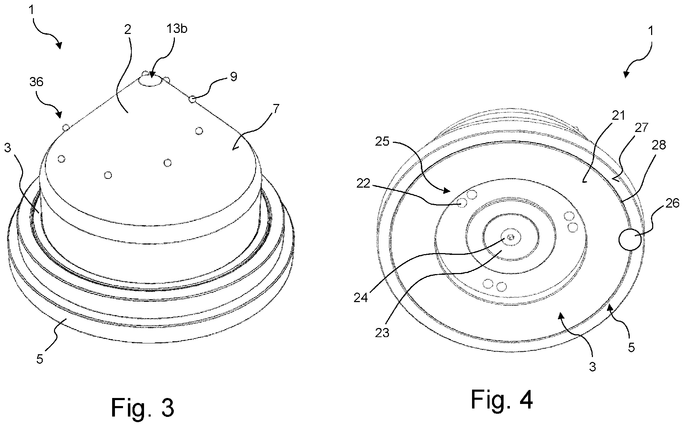

Die **Fig. 3** zeigt das Kalibriernormal 1 von Fig. 1 und Fig. 2 im zusammengesetzten Zustand mit Grundplatte 3, Grundkörper 2 und aufgeschraubtem Basisring 5 in einer Schrägansicht (von schräg oben), wobei der Haubenbecher jedoch weggelassen wurde. In der Schrägansicht ist gut die Anordnung der Kalibrier-Kugelelemente 9 in einer Spirale 36 auf der Außenfläche 7 des Grundkörpers 2 zu erkennen.

Der Grundkörper 2 verjüngt sich im Bereich der Außenfläche 7 gemäß seiner konischen Form zu seinem vorderen/oberen Ende 13b hin.

In der **Fig. 4** ist das Kalibriernormal 1 von Fig. 3 in einer weiteren Schrägansicht (von schräg unten) gezeigt. In dieser Schrägansicht ist das Dreipunkt-Lager 25, welches durch die drei Paare von Lagerkugeln 22 ausgebildet ist, gut zu erkennen, und ebenso der mit der Befestigungsschraube 24 an die Unterseite 21 der Grundplatte 3 befestigte Haltemagnet 23.

Die Unterseite 21 der Grundplatte 3 und eine Unterseite 27 des Basisrings 5 schließen hier bündig aneinander an. Über die Kontaktfläche 28 (also hier über die aneinander anliegenden Gewinde an der unteren Stirnseite) zwischen der Grundplatte 3 und dem Basisring 5 ist hier unterseitig ein Siegel 26 aufgeklebt. Durch ein unbeschädigtes Siegel 26 kann nachgewiesen werden, dass seit der Anbringung des Siegels 26 der Basisring 5 bzw. die Haubenanordnung nicht von der Grundplatte 3 abgeschraubt wurde, und entsprechend der Grundkörper und die Kalibrier-Kugelelemente durchgängig von der Haubenanordnung geschützt waren, so dass Verformungen oder Beschädigungen des Grundkörpers und der Kalibrier-Kugelelemente durch äußere Kräfte seit diesem Zeitpunkt praktisch ausgeschlossen waren.

Die **Fig. 5** zeigt in einem Längsschnitt den Grundkörper 2 des Kalibriernormals von Fig. 1 und Fig. 2. In dem Längsschnitt ist gut zu erkennen, dass der Grundkörper 2 eine im Wesentlichen einheitliche Wandstärke WS aufweist, insbesondere im Bereich der Außenfläche 7. Dadurch ist in einem Computertomographen die Abbildung von Kalibrier-Kugelelementen 9 nahe der Längsachse (in der jeweiligen Drehposition) unter sehr ähnlichen Bedingungen, insbesondere näherungsweise gleicher in Strahlausbreitungsrichtung durchstrahlter Wandstärke des Grundkörpers 2, über einen großen Axialbereich möglich, und damit besonders genau.

In der Seitenansicht von **Fig. 6** und der Aufsicht von oben von **Fig. 7** auf den Grundkörper 2 des Kalibriernormals von Fig. 1 und Fig. 2 kann die spiralförmige Positionierung der Kalibrier-Kugelelemente 9 der ersten Ausführungsform gut ersehen werden. Die Kalibrier-Kugelelemente 9 bilden hier eine Spirale 36 im einem Umlauf um die Längsachse LA aus. In Umfangsrichtung benachbarte Kalibrier-Kugelelemente 9 weisen in axialer Richtung (entlang der Längsachse LA) einen einheitlichen Abstand AA (von Mittelpunkt zu Mittelpunkt) auf. Der Kegelwinkel KW des Grundkörpers 2 im Teilbereich 2a beträgt zudem hier 45°. Zudem weisen in Umfangsrichtung benachbarte Kalibrier-Kugelelemente 9 in Umfangsrichtung einen einheitlichen relativen Drehwinkel zueinander auf, auch genannt Winkelversatz WV, der hier 45° beträgt.

Der Durchmesser D der Kalibrier-Kugelelemente 9 ist deutlich kleiner als der axiale Abstand AA, also D<AA. Die Kalibrier-Kugelelemente 9 überlappen somit nicht in axialer Richtung, unabhängig von der Drehposition, so dass ein in radialer Richtung propagierender Röntgenstrahl (in Fig. 6 senkrecht zur Zeichenebene propagierender Röntgenstrahl) niemals zwei Kalibrier-Kugelelemente hintereinander durchstrahlen muss. In einem axialen Intervall 29, in welchem sich ein Kalibrier-Kugelelement 9 erstreckt, erstreckt sich kein weiteres Kalibrier-Kugelelement 9. Vorliegend gilt hier zudem näherungsweise D=0,67*AA. Damit gibt es zwischen zwei axial aufeinanderfolgenden Kalibrier-Kugelelementen 9 ein freies, axiales Nachbarintervall 30 einer axialen Länge NIL mit hier NIL=0,33*AA, in welchem sich auch kein Kalibrier-Kugelelement 9 erstreckt. Der Durchmesser D entspricht dem doppelten Krümmungsradius des Kalibrier-Kugelelements 9, also D=2*RKK. Somit gilt in der vorliegenden Ausführungsform auch NIL=0,33*(D/0,67) und weiter NIL=1/2*D und weiter NIL=1*RKK. Man beachte, dass allgemein bevorzugt zumindest NIL≥0,2*RKK gilt, besonders bevorzugt NIL≥0,5*RKK.

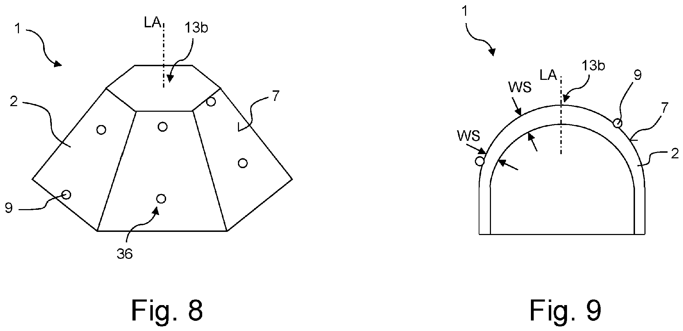

Die **Fig. 8** zeigt in einer schematischen Schrägansicht ein Kalibriernormal 1 gemäß einer beispielhaften zweiten Ausführungsform. Man beachte, dass in Fig. 8 die Grundplatte, das Dreipunkt-Lager und der Haltemagnet nicht näher dargestellt sind (vgl. hierzu aber Figs. 1 und 2).

Bei dieser Ausführungsform weist der Grundkörper 2 im Bereich der Außenfläche 7 einen hexagonalen Querschnitt auf, der sich zum oberen, abgestumpften Ende 13b des Grundkörpers 2 kontinuierlich und linear verjüngt. Der Grundkörper 2 weist entsprechend im Bereich der Außenfläche 7 bezüglich der Längsachse LA eine 6-zählige Drehsymmetrie auf. Die Kalibrier-Kugelelemente 9 sitzen auf der Außenfläche 7 unmittelbar auf und bilden hier eine Spirale 36 mit 1,5 Umläufen.

Die **Fig. 9** zeigt in einem schematischen Längsschnitt eine beispielhafte dritte Ausführungsform eines Kalibriernormals 1. Man beachte, dass in Fig. 9 die Grundplatte, das Dreipunkt-Lager und der Haltemagnet nicht näher dargestellt sind (vgl. hierzu aber Figs. 1 und 2).

Bei dieser Ausführungsform ist der Grundkörper 2 in Bereich seiner Außenfläche 7 im oberen Teilbereich 2a sphärisch geformt, und verjüngt sich entsprechend kontinuierlich zum oberen Ende 13b hin. Der Grundkörper 2 ist zudem bezüglich der Längsachse LA rotationssymmetrisch.

Die lokale Wandstärke WS des Grundkörpers 2 nimmt bei der gezeigten Ausführungsform nach axial oben hin etwas zu. Dadurch kann erreicht werden, dass bei Kalibrier-Kugelelementen 9, die (in der jeweiligen Drehposition einer CT-Aufnahme) weiter weg von der Längsachse LA liegen, über ein größeres axiales Intervall näherungsweise gleiche Aufnahmebedingungen herrschen, und insbesondere eine näherungsweise gleiche Wandstärke in der Strahlausbreitungsrichtung durchstrahlt wird.

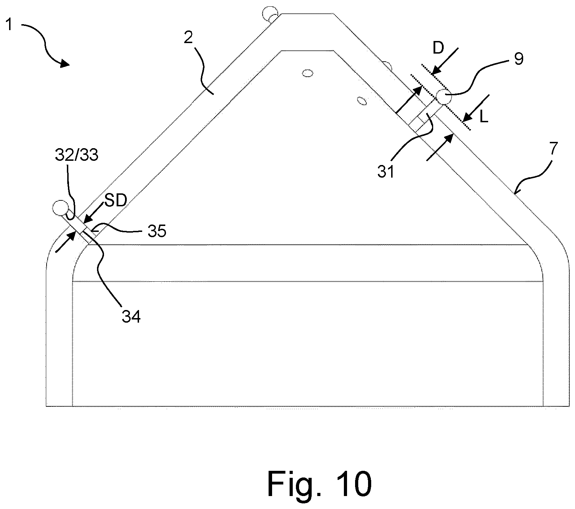

Die **Fig. 10** zeigt in einem schematischen Längsschnitt einen Grundkörper 2 eines Kalibriernormals 1 gemäß einer beispielhaften vierten Ausführungsform der Erfindung, ähnlich dem in Fig. 5 gezeigten Grundkörper mit konischer Verjüngung. Es werden nur die wesentlichen Unterschiede erläutert. Man beachte, dass in Fig. 10 die Grundplatte, das Dreipunkt-Lager und der Haltemagnet nicht näher dargestellt sind (vgl. hierzu aber Figs. 1 und 2).

Bei der vierten Ausführungsform sind die Kalibrier-Kugelelemente 9 auf Steckstiften 31 angeordnet. Die Steckstifte 31 weisen dafür am vorderen (nach außen gerichteten), stirnseitigen Ende 33 Vertiefungen 32 auf, die hier sphärisch entsprechend dem Krümmungsradius der Kalibrier-Kugelelemente 9 ausgebildet sind. Das jeweils andere, hintere Ende 34 des Steckstifts 31 ist in eine Bohrung 35 im Grundkörper 2 eingesetzt und in der Bohrung 35 festgeklebt. Die Bohrungen 35 sind hier als Durchgangsbohrungen ausgeführt, es können alternativ aber auch Sackbohrungen vorgesehen sein. Die Bohrungen 35 werden durch die Steckstifte 31 verschlossen.

Die Steckstifte 31 stehen hier mit einer Länge L gegenüber der Außenfläche 7 über. In der gezeigten Ausführungsform gilt ca. L=D. Allgemein bevorzugt ist L≤2*D, besonders bevorzugt L≤1,5*D, um mechanische Momente bei einer mechanischen Abtastung der Kalibrier-Kugelelemente 9 gering zu halten. Die Steckstifte 31 und die zugehörigen Bohrungen 35 sind in der gezeigten Ausführungsform entlang der jeweiligen lokalen Oberflächennormalen der konischen Außenfläche des Grundkörpers 2 orientiert; entsprechend stehen hier die Steckstifte 31 vom Grundkörper 2 bzw. von der Außenfläche 7 in eine Richtung ab, die eine radiale Richtungskomponente aufweist. Die Steckstifte 31 haben einen Steckstiftdurchmesser SD, der kleiner ist als der Durchmesser D der Kalibrier-Kugelelemente 9, also SD<D, bevorzugt wobei SD≤0,75*D.

Durch die Steckstifte 31 werden die Kalibrier-Kugelelemente 9 für einen mechanischen Taster einer Koordinatenmessmaschine besser zugänglich; insbesondere ist auch ein gewisser Hintergriff der Kalibrier-Kugelelemente 9 möglich.

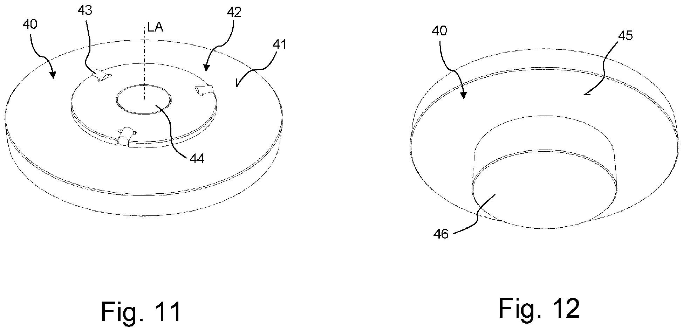

Die **Fig. 11** (von schräg oben) und die **Fig. 12** (von schräg unten) illustrieren eine Adapterplatte 40 für ein beispielhaftes Kalibriernormal-System umfassend die Adapterplatte 40 und ein Kalibriernormal, beispielsweise wie in Fig. 1 und Fig. 2 dargestellt.

Die Adapterplatte 40 ist im Wesentlichen scheibenförmig und rotationssymmetrisch bezüglich der Längsachse LA ausgebildet.

Um auf der Oberseite 41 der Adapterplatte 40 die Grundplatte des Kalibriernormals zu befestigen, ist an dieser Oberseite 41 ein Dreipunkt-Gegenlager 42 ausgebildet. Dieses umfasst in der gezeigten Ausführungsform drei Hartmetallrollen 43, die um die Längsachse herum und in Umfangsrichtung um 120° versetzt angeordnet sind. Die Achsen der Hartmetallrollen 43 sind auf ein gemeinsames Zentrum gerichtet. Die Hartmetallrollen 43 können jeweils zwischen einem Paar von Lagerkugeln eines Dreipunkt-Lagers an der Unterseite der Grundplatte des Kalibriernormals eingreifen (vgl. hierzu Fig. 4 oben). Im Bereich des Zentrums zwischen den Hartmetallrollen 43 ist zudem ein Gegen-Haltemagnet 44 angeordnet. Der Gegen-Haltemagnet 44 ist hier scheibenförmig ausgebildet und an der Oberseite der Adapterplatte 40 in eine entsprechende Vertiefung eingeklebt und/oder eingepresst. Der Gegen-Haltemagnet 44 kann mit dem Haltemagnet an der Unterseite der Grundplatte des Kalibriernormals zusammenwirken, und dadurch die Grundplatte auf die Adapterplatte 40 ziehen. Die magnetische Kraft hält dabei die Grundplatte bzw. das Dreipunkt-Lager sicher und spielfrei auf der Adapterplatte 40 bzw. auf dem Dreipunkt-Gegenlager 42.

Man beachte, dass alternativ auch das Dreipunkt-Lager mit den Hartmetallrollen 43 und das Dreipunkt-Gegenlager 42 mit den Paaren von Lagerkugeln ausgebildet sein kann (nicht näher dargestellt).

An der Unterseite 45 der Adapterplatte 40 ist ein Spannzapfen 46 ausgebildet, mit dem die Adapterplatte 40 an einem Spannlager einer taktilen Koordinatenmessmaschine eingespannt werden kann. Mechanische Spannungen, die durch das Spannlager über den Spannzapfen 40 auf die Adapterplatte 40 wirken, werden am Übergang vom Dreipunkt-Gegenlager 42 der Adapterplatte 40 auf das Dreipunkt-Lager der Grundplatte bezüglich des Kalibriernormals entkoppelt.

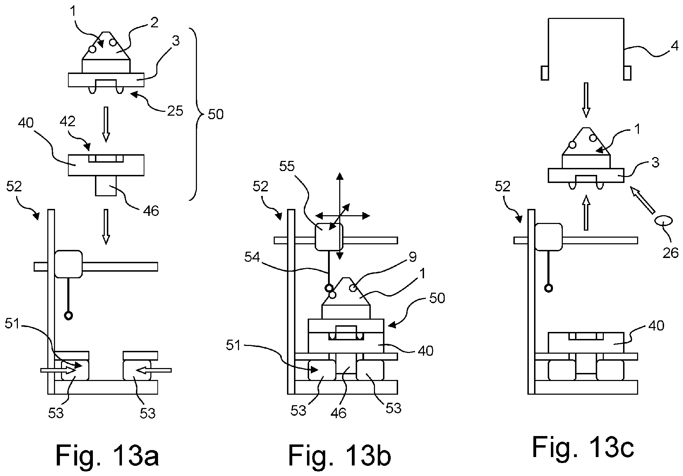

Die Figuren 13a bis 13f illustrieren schematisch die Verwendung eines erfindungsgemäßen Kalibriernormals 1 wie in Fig. 1 und Fig. 2 dargestellt bzw. eines Kalibriernormal-Systems 50 umfassend das Kalibriernormal 1 und eine Adapterplatte wie in Fig. 11 und Fig. 12 dargestellt im Rahmen der Erfindung in aufeinanderfolgenden Schritten.

In **Fig. 13a** wird in ein erster Schritt a) illustriert. Das Kalibriernormal 1, das den Grundkörper 2 und die Grundplatte 3 umfasst, wird auf die Adapterplatte 40 aufgesetzt. Durch magnetische Haltekraft werden dabei das Dreipunkt-Lager 25 und das Dreipunkt-Gegenlager 42 aneinander befestigt. Das Kalibriernormal 1 und die Adapterplatte 40 bilden zusammen ein Kalibriernormal-System 50 (siehe auch Fig. 13b für den zusammengesetzte Zustand). Zudem wird die Adapterplatte 40 in das Spannlager 51 einer taktilen Koordinatenmessmaschine 52 eingesetzt und im Spannlager 51 verspannt. Dabei werden Spannbacken 53 auf den im Spannlager 51 angeordneten Spannzapfen 46 der Adapterplatte 40 zu verfahren. Man beachte, dass die Reihenfolge dieser beiden beschriebenen Teilschritte hierbei ohne Belang ist.

In **Fig. 13b** ist das zusammengesetzte Kalibriernormal-System 50 im Spannlager 51 der Koordinatenmessmaschine 52 angeordnet und sicher gehalten. Sodann erfolgt in einem zweiten Schritt b) mit einem mechanischen Fühler (auch genannt Taster) 54 ein taktiles Vermessen der geometrischen Maße an Oberfläche des Kalibriernormals 1 durch die Koordinatenmessmaschine 52. Der Fühler 54 ist dafür an einem Kreuzschlittensystem 55 befestigt und typischerweise in drei orthogonale Raumrichtungen verfahrbar. Durch die taktile Vermessung des Kalibriernormals 1 werden insbesondere relative Positionen der Kalibrier-Kugelelemente 9 des Kalibriernormals 1 bestimmt.

In einem dritten Schritt c), illustriert in **Fig. 13c****,** wird sodann das Kalibriernormal 1 von der Koordinatenmessmaschine 52 entfernt. In der gezeigten Variante wird sodann eine Haubenanordnung 4 auf die Grundplatte 3 des Kalibriernormals 1 aufgesetzt und aufgeschraubt. Im aufgeschraubten Zustand wird zudem ein Siegel 26 angebracht, das eine Kontaktfläche zwischen der Grundplatte 3 und der Haubenanordnung 4 übergreift (siehe dazu auch Fig. 4). Typischerweise wird auch die Adapterplatte 40 wieder aus der Koordinatenmessmaschine 52 entfernt (letzteres nicht näher dargestellt).

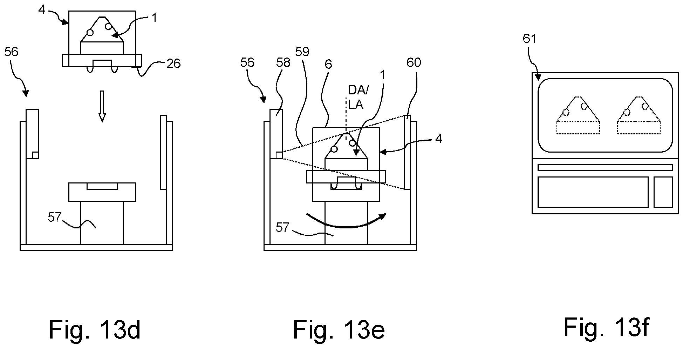

Sodann wird in einem vierten Schritt d) wie in **Fig. 13d** dargestellt das Kalibriernormal 1 mitsamt der Haubenanordnung 4 zu einem industriellen Computertomographen 56 (auch genannt ICT-Apparatur) verbracht und auf einem Drehhalter 57 der ICT-Apparatur 56 abgestellt; eine besondere Befestigung auf dem Drehhalter 57 ist in der Regel nicht nötig, aber möglich, falls gewünscht. Die ICT-Apparatur 56 soll auf ihre Abbildungsgenauigkeit überprüft und ggf. nachjustiert werden.

In einem nachfolgenden, fünften Schritt e) erfolgt sodann eine röntgenographische Vermessung des Kalibriernormals 1, wie in **Fig. 13e** dargestellt. Das Kalibriernormal 1 wird mittels des Drehhalters 57 um eine Drehachse DA, die der Längsachse LA des Kalibriernormals 1 entspricht, gedreht. In verschiedenen Drehpositionen wird jeweils eine röntgenographische Aufnahme vom Kalibriernormal 1 gemacht. Dazu emittiert eine Röntgenröhre 58 eine Röntgenstrahlung 59 in Richtung auf einen 2D-ortsauflösender Röntgendetektor 60 zu; die Röntgenstrahlung 59 propagiert dabei im Wesentlichen in horizontaler Richtung bzw. senkrecht zur Drehachse DA. Das Kalibriernormal 1 wird dabei von der Röntgenstrahlung 59 durchdrungen, und auf dem Röntgendetektor 60 entsteht ein Röntgen-Schattenwurf des Kalibriernormals 1. Der Haubenbecher 6 der Haubenanordnung wird dabei von der Röntgenstrahlung 59 durchdrungen, was lediglich eine geringe Abschwächung bewirkt.

In einem sechsten Schritt f), dargestellt in **Fig. 13f****,** werden sodann die röntgenographisch vermessenen Maße des Kalibriernormals (die aus der Vielzahl von Röntgenaufnahmen aus Schritt e) berechnet wurden und insbesondere die relativen Positionen der Kalibrier-Kugelelemente 9 umfassen) mit den taktil vermessenen, als wahr angenommenen Maßen des Kalibriernormals verglichen. Der Vergleich erfolgt typischerweise an einem Computer 61. Wenn die beiden Maße hinreichend übereinstimmen, kann die ICT-Apparatur freigegeben werden. Stimmen die beiden Maße nicht hinreichend überein, so kann die ICT-Apparatur nicht freigegeben werden; typischerweise erfolgen dann Nachjustierungen von Betriebsparametern an der ICT-Apparatur, ggf. auch weitergehende Wartungs- und Reparaturarbeiten. Üblicherweise werden dann die Schritte e) und f) wiederholt, bis eine ausreichende Übereinstimmung der taktil vermessenen Maße und der (erneut) röntgenographisch vermessenen Maße erhalten wird, und die ICT-Apparatur freigegeben werden kann.

### Bezugszeichenliste

- 1: Kalibriernormal
- 2: Grundkörper
- 2a: vorderer/oberer Teilbereich des Grundkörpers
- 2b: hinterer/unterer Teilbereich des Grundkörpers
- 2c: Übergangsbereich des Grundkörpers
- 3: Grundplatte
- 4: Haubenanordnung
- 5: Basisring
- 6: Haubenbecher
- 7: Außenfläche
- 8: Vertiefung (im Grundkörper)
- 9: Kalibrier-Kugelelement
- 10: weitere Außenfläche
- 11: weitere Außenfläche
- 12: Ringnut
- 13a: hinteres Ende des Grundkörpers
- 13b: vorderes Ende des Grundkörpers
- 14: Oberseite der Grundplatte
- 15: Grundplattengewinde
- 16: Haubengewinde
- 17: Basisring-Stutzen
- 18: Schulter des Basisrings
- 19: hinteres Ende des Haubenbechers
- 20: vorderes Ende des Haubenbechers
- 21: Unterseite der Grundplatte
- 22: Lagerkugeln
- 23: Haltemagnet
- 24: Befestigungsschraube
- 25: Dreipunkt-Lager
- 26: Siegel
- 27: Unterseite des Basisrings
- 28: Kontaktfläche
- 29: axiales Intervall (Erstreckung eines Kalibrier-Kugelelements)
- 30: (freies) axiales Nachbarintervall (Erstreckung Zwischenbereich zwischen Kalibrier-Kugelelementen)
- 31: Steckstift
- 32: Vertiefung (am vorderen Ende des Steckstifts)
- 33: vorderes/stirnseitiges Ende (des Steckstifts)
- 34: hinteres/anderes Ende (des Steckstift)
- 35: Bohrung
- 36: Spirale
- 37: Oberseite des Basisrings
- 40: Adapterplatte
- 41: Oberseite der Adapterplatte
- 42: Dreipunkt-Gegenlager
- 43: Hartmetallrollen
- 44: Gegen-Haltemagnet
- 45: Unterseite der Adapterplatte
- 46: Spannzapfen
- 50: Kalibriernormal-System
- 51: Spannlager
- 52: (taktile) Koordinatenmessmaschine
- 53: Spannbacken
- 54: (taktiler) Fühler / Taster
- 55: Kreuzschlittensystem
- 56: industrieller Computertomograph /ICT-Apparatur
- 57: Drehhalter
- 58: Röntgenröhre
- 59: Röntgenstrahlung
- 60: (2D-auflösender) Röntgendetektor
- 61: Computer
- AA: axialer Abstand (von Mittelpunkt zu Mittelpunkt)
- D: Durchmesser eines Kalibrier-Kugelelements
- DA: Drehachse des Drehhalters
- KW: Kegelwinkel
- L: überstehende Länge des Steckstifts
- LA: Längsachse
- NIL: axiale Länge des axialen Nachbarintervalls
- RKK: Krümmungsradius des Kalibrier-Kugelelements
- SD: Durchmesser des Steckstifts
- WS: Wandstärke
- WV: Drehwinkel / Winkelversatz

## Patentansprüche

1. Kalibriernormal (1) für einen industriellen Computertomographen (56), wobei das Kalibriernormal (1) einen Grundkörper (2) mit einer Längsachse (LA) aufweist,
wobei der Grundkörper (2) eine Außenfläche (7) aufweist, die bezüglich einer Umfangsrichtung um die Längsachse (LA) herum durchgehend umlaufend ausgebildet ist und sich entlang der Längsachse (LA) erstreckt,
wobei an dem Grundkörper (2) über die radial nach außen gerichtete Außenfläche (7) verteilt eine Vielzahl von Kalibrier-Kugelelementen (9) befestigt ist,
wobei die Kalibrier-Kugelelemente (9) über eine Vielzahl von axialen Positionen bezüglich der Längsachse (LA) verteilt sind,
wobei der Grundkörper (2) sich im Bereich der Außenfläche (7) entlang der Längsachse (LA) verjüngt,
und wobei die Kalibrier-Kugelelemente (9) über eine Vielzahl von radialen Positionen bezüglich der Längsachse (LA) verteilt sind,
**dadurch gekennzeichnet,**
**dass** das Kalibriernormal (1) weiterhin eine Grundplatte (3) aufweist, dass an einer Oberseite (14) der Grundplatte (3) der Grundkörper (2) befestigt ist,
und **dass** an einer Unterseite (21) der Grundplatte (3) ein Dreipunkt-Lager (25) und ein Haltemagnet (23) ausgebildet sind.

2. Kalibriernormal (1) nach Anspruch 1, **dadurch gekennzeichnet, dass** der Grundkörper (2) sich im Bereich der Außenfläche (7) entlang der Längsachse (LA) kontinuierlich verjüngt.

3. Kalibriernormal (1) nach einem der Ansprüche 1 oder 2, **dadurch gekennzeichnet, dass** der Grundkörper (2) zumindest im Bereich der Außenfläche (7) bezüglich der Längsachse (LA) rotationssymmetrisch ist.

4. Kalibriernormal (1) nach Anspruch 3, **dadurch gekennzeichnet, dass** der Grundkörper (2) zumindest im Bereich der Außenfläche (7) kegelförmig ausgebildet ist.

5. Kalibriernormal (1) nach Anspruch 3, **dadurch gekennzeichnet, dass** der Grundkörper (2) zumindest im Bereich der Außenfläche (7) entsprechend einem Teil einer Kugelfläche ausgebildet ist.

6. Kalibriernormal (1) nach einem der Ansprüche 1 oder 2, **dadurch gekennzeichnet, dass** der der Grundkörper (2) zumindest im Bereich der Außenfläche (7) bezüglich der Längsachse (LA) eine Drehsymmetrie mit der Längsachse (LA) als N-zähliger Drehachse aufweist, mit N≥6.

7. Kalibriernormal (1) nach einem der Ansprüche 1 bis 6, **dadurch gekennzeichnet, dass** zumindest für eine Mehrzahl der Kalibrier-Kugelelemente (9) gilt, dass in einem axialen Intervall (29), in welchem sich ein jeweiliges Kalibrier-Kugelelement (9) entlang der Längsachse (LA) erstreckt, sich keine weiteren Kalibrier-Kugelelemente (9) erstrecken,
insbesondere wobei für alle Kalibrier-Kugelelemente (9) gilt, dass in einem axialen Intervall (29), in welchem sich ein jeweiliges Kalibrier-Kugelelement (9) entlang der Längsachse (LA) erstreckt, sich keine weiteren Kalibrier-Kugelelemente (9) erstrecken.

8. Kalibriernormal (1) nach Anspruch 7, **dadurch gekennzeichnet, dass** auch in axialer Richtung vor und hinter diesem axialen Intervall (29) jeweils in einem axialen Nachbarintervall (30) sich keine weiteren Kalibrier-Kugelelemente (9) erstrecken,
insbesondere wobei ein jeweiliges Nachbarintervall (30) eine axiale Länge NIL aufweist, für die gilt NIL ≥ 0,2*RKK, mit RKK: Krümmungsradius des jeweiligen Kalibrier-Kugelelements (9).

9. Kalibriernormal (1) nach einem der vorhergehenden Ansprüche, **dadurch gekennzeichnet, dass** zumindest ein Teil der Kalibrier-Kugelelemente (9), die auf der Außenfläche (7) des Grundkörpers (2) verteilt angeordnet sind, gemäß einer Spirale (36) angeordnet sind,
bevorzugt wobei in der Spirale (36) aufeinanderfolgende Kalibrier-Kugelelemente (9) jeweils einen gleichen Abstand (AA) entlang der Längsachse (LA) zueinander aufweisen und um gleiche Drehwinkel (WV) um die Längsachse (LA) herum zueinander versetzt sind.

10. Kalibriernormal (1) nach einem der vorhergehenden Ansprüche, **dadurch gekennzeichnet, dass** der Grundkörper (2) als ein Hohlkörper ausgebildet ist.

11. Kalibriernormal (1) nach Anspruch 10, **dadurch gekennzeichnet, dass** eine Wandstärke (WS) des Grundkörpers (2) im Bereich der Außenfläche (7) entlang der Längsachse (LA) konstant ist.

12. Kalibriernormal (1) nach Anspruch 10, **dadurch gekennzeichnet, dass** eine Wandstärke (WS) des Grundkörpers (2) im Bereich der Außenfläche (7) entlang der Längsachse (LA) sich in derjenigen Richtung, entlang der sich der Grundkörper (2) verjüngt, zunimmt.

13. Kalibriernormal (1) nach einem der Ansprüche 1 bis 12, **dadurch gekennzeichnet, dass** in die Außenfläche (7) des Grundkörpers (2) Vertiefungen (8), insbesondere sphärische Vertiefungen (8), eingebracht sind, in die die Kalibrier-Kugelelemente (9) eingesetzt sind.

14. Kalibriernormal (1) nach einem der Ansprüche 1 bis 12, **dadurch gekennzeichnet, dass** die Kalibrier-Kugelelemente (9) jeweils an Steckstiften (31) befestigt sind, die jeweils an einem stirnseitigen Ende (33) eine Vertiefung (32), insbesondere sphärische Vertiefung (32), aufweisen, in die ein jeweiliges Kalibrier-Kugelelement (9) eingesetzt ist, und die jeweils mit einem anderen Ende (34) in eine jeweilige Bohrung (35) an der Außenfläche (7) des Grundkörpers (7) eingesetzt sind, wobei der Steckstift (31) mit einem Teilabschnitt gegenüber der Außenfläche (7) hervorsteht.

15. Kalibriernormal (1) nach einem der vorhergehenden Ansprüche, **dadurch gekennzeichnet, dass** der Grundkörper (2) aus einem Kohlefaser-Verbundwerkstoff gefertigt ist.

16. Kalibriernormal (1) nach einem der vorhergehenden Ansprüche, **dadurch gekennzeichnet,**
**dass** die Grundplatte (3) ganz oder überwiegend aus Metall gefertigt ist, und/oder dass an der Oberseite (14) der Grundplatte (3) der Grundkörper (2) angeklebt ist.

17. Kalibriernormal (1) nach einem der vorhergehenden Ansprüche, **dadurch gekennzeichnet,**
**dass** das Kalibriernormal (1) weiterhin eine Haubenanordnung (4) umfasst, die an der Oberseite (14) der Grundplatte (3) auf die Grundplatte (3) aufschraubbar ist,
wobei die Haubenanordnung (4) im Bereich ihrer Unterseite (21) ein Haubengewinde (16), insbesondere ein Innengewinde, ausbildet und die Grundplatte (3) ein dazu passendes Grundplattengewinde (15), insbesondere Außengewinde, ausbildet,
und **dass** die Haubenanordnung (4) im aufgeschraubten Zustand zusammen mit der Grundplatte (3) den Grundkörper (2) vollständig abdeckt.

18. Kalibriernormal (1) nach Anspruch 17, **dadurch gekennzeichnet,**
**dass** die Haubenanordnung (4) einen Basisring (5) aufweist, an welchem das Haubengewinde (16) ausgebildet ist,
insbesondere wobei der Basisring (5) ganz oder überwiegend aus Metall gefertigt ist,
und **dass** die Haubenanordnung (4) einen Haubenbecher (6) aufweist, der im Bereich einer Oberseite (37) des Basisrings (5) befestigt ist, insbesondere angeklebt ist,
insbesondere wobei der Haubenbecher (6) zumindest teilweise aus einem transparenten Material und/oder aus Kunststoff gefertigt ist, bevorzugt aus einem transparenten Kunststoff.

19. Kalibriernormal (1) nach einem der vorhergehenden Ansprüche, **dadurch gekennzeichnet,**
**dass** das Dreipunkt-Lager (25) drei Paare von Lagerkugeln (22) oder drei Hartmetallrollen (43) umfasst, die an der Unterseite (21) der Grundplatte (3) befestigt sind, insbesondere angeklebt sind,
und **dass** der Haltemagnet (23) mittig zwischen den Lagerkugeln (22) oder Hartmetallrollen (43) an der Unterseite (21) der Grundplatte (3) befestigt ist, insbesondere angeschraubt ist.

20. Kalibriernormal nach Anspruch 19, **dadurch gekennzeichnet, dass** der Haltemagnet durch eine Ronde ausgebildet ist.

21. Kalibriernormal-System (50),
umfassend ein Kalibriernormal (1) nach einem der vorhergehenden Ansprüche sowie eine Adapterplatte (40),
wobei an einer Oberseite (41) der Adapterplatte (40) ein Dreipunkt-Gegenlager (42) und ein Gegen-Haltemagnet (44) ausgebildet sind, entsprechend einem Positionsbild des Dreipunkt-Lagers (25) und des Haltemagneten (23) der Grundplatte (3) des Kalibriernormals (1),
und wobei die Adapterplatte (40) weiterhin im Bereich ihrer Unterseite (45) einen Spannzapfen (46) zum Einspannen in ein Spannlager (51) einer Koordinatenmessmaschine (52) ausbildet.

22. Verwendung eines Kalibriernormal-Systems (50) nach Anspruch 21, mit folgenden Schritten:
Schritt a) in beliebiger Reihenfolge werden das Kalibriernormal (1) auf der Adapterplatte (40) über das Dreipunkt-Lager (25), das Dreipunkt-Gegenlager (42), den Haltemagneten (23) und den Gegen-Haltemagneten (44) aneinander befestigt, und die Adapterplatte (40) wird mit dem Spannzapfen (46) in einem Spannlager (51) einer Koordinatenmessmaschine (52) befestigt;
Schritt b) geometrische Maße des Kalibriernormals (1) werden mit der Koordinatenmessmaschine (52) taktil vermessen;
Schritt c) das Kalibriernormal (1) wird von der Adapterplatte (40) entfernt;
Schritt d) das Kalibriernormal (1) wird zu einem industriellen Computertomographen (56) verbracht;
Schritt e) geometrische Maße des Kalibriernormals (1) werden mit dem industriellen Computertomographen (56) röntgenographisch vermessen, wobei das Kalibriernormal (1) um eine Drehachse (DA) des Computertomographen (56), die parallel zur Längsachse (LA) des Kalibriernormals (1) verläuft, gedreht wird;
Schritt f) die röntgenographisch vermessenen geometrischen Maße des Kalibriernormals (1) und die taktil vermessenen geometrischen Maße des Kalibriernormals (1) werden miteinander verglichen, um die Funktion des industriellen Computertomographen (56) zu überprüfen und/oder um den industriellen Computertomographen (56) zu justieren.

23. Verwendung des Kalibriernormal-Systems (50) nach Anspruch 22, **dadurch gekennzeichnet,**
**dass** das Kalibriernormal (1) weiterhin ausgebildet ist gemäß einem der Ansprüche 17 oder 18,
**dass** in Schritt b) die Haubenanordnung (4) abgeschraubt ist,
**dass** nach Schritt b) und vor Schritt d) die Haubenanordnung (4) aufgeschraubt wird,
und **dass** in Schritt e) die Haubenanordnung (4) aufgeschraubt ist.

24. Verwendung des Kalibriernormal-Systems (50) nach Anspruch 23, **dadurch gekennzeichnet,**
**dass** im aufgeschraubten Zustand der Haubenanordnung (4) ein Teil der Haubenanordnung (4), insbesondere eine erste, radial äußere, umlaufende Fläche, und ein Teil der Grundplatte (3), insbesondere eine zweite, radial äußere, umlaufende Fläche, an einer Kontaktfläche (28) aneinander anschließen, insbesondere bündig aneinander anschließen,
**dass** nach Schritt b) und vor Schritt d), nachdem die Haubenanordnung (4) aufgeschraubt wurde, ein Siegel (26) auf diesen beiden Teilen der Haubenanordnung (4) und der Grundplatte (3) aufgebracht wird, welches die Kontaktfläche (28) übergreift,
und **dass** vor Schritt e) verifiziert wird, dass das Siegel (26) unbeschädigt ist.

## Claims

1. Calibration standard (1) for an industrial computer tomograph (56),
wherein the calibration standard (1) has a main body (2) with a longitudinal axis (LA),
wherein the main body (2) has an outer surface (7) which is continuously circumferential around the longitudinal axis (LA) with respect to a circumferential direction and which extends along the longitudinal axis (LA),
wherein a plurality of calibration sphere elements (9) are attached to the main body (2) distributed over the radially outward-directed outer surface (7),
wherein the calibration sphere elements (9) are distributed over a plurality of axial positions with respect to the longitudinal axis (LA),
wherein the main body (2) tapers along the longitudinal axis (LA) in the region of the outer surface (7),
and wherein the calibration sphere elements (9) are distributed over a plurality of radial positions with respect to the longitudinal axis (LA),
**characterized in that**
the calibration standard (1) further has a base plate (3),
**that** the main body (2) is attached to an upper side (14) of the base plate (3),
**and that** a three-point bearing (25) and a holding magnet (23) are formed on an underside (21) of the base plate (3).

2. Calibration standard (1) according to claim 1, **characterized in that** the main body (2) tapers continuously along the longitudinal axis (LA) in the region of the outer surface (7).

3. Calibration standard (1) according to any of claims 1 or 2, **characterized in that** the main body (2) is rotationally symmetrical with respect to the longitudinal axis (LA) at least in the region of the outer surface (7).

4. Calibration standard (1) according to claim 3, **characterized in that** the main body (2) is conical at least in the region of the outer surface (7).

5. Calibration standard (1) according to claim 3, **characterized in that** the main body (2) is formed at least in the region of the outer surface (7) corresponding to a part of a spherical surface.

6. Calibration standard (1) according to any of claims 1 or 2, **characterized in that** the main body (2) has, at least in the region of the outer surface (7), a rotational symmetry with respect to the longitudinal axis (LA), with the longitudinal axis (LA) as an N-fold axis of rotation, with N≥6.

7. Calibration standard (1) according to any of claims 1 to 6, **characterized in that,** at least for a plurality of the calibration sphere elements (9), no further calibration sphere elements (9) extend in an axial interval (29) along the longitudinal axis (LA) in which a respective calibration sphere element (9) extends,
in particular, wherein, for all calibration sphere elements (9), no further calibration sphere elements (9) extend in an axial interval (29) along the longitudinal axis (LA) in which a respective calibration sphere element (9) extends.

8. Calibration standard (1) according to claim 7, **characterized in that,** additionally, no further calibration sphere elements (9) extend in the axial direction in front of and behind this axial interval (29) in each case in an axial adjacent interval (30),
in particular wherein each adjacent interval (30) has an axial length NIL for which NIL ≥ 0.2*RKK, where RKK is the radius of curvature of the corresponding calibration sphere element (9).

9. Calibration standard (1) according to any of the preceding claims, **characterized in that** at least some of the calibration sphere elements (9), which are distributed on the outer surface (7) of the main body (2), are arranged according to a spiral (36),
preferably wherein, in the spiral (36), successive calibration sphere elements (9) are each at an equal distance (AA) from one another along the longitudinal axis (LA) and are offset from one another by the same angle of rotation (WV) around the longitudinal axis (LA).

10. Calibration standard (1) according to any of the preceding claims, **characterized in that** the main body (2) is designed as a hollow body.

11. Calibration standard (1) according to claim 10, **characterized in that** a wall thickness (WS) of the main body (2) in the region of the outer surface (7) is constant along the longitudinal axis (LA).

12. Calibration standard (1) according to claim 10, **characterized in that** a wall thickness (WS) of the main body (2) in the region of the outer surface (7) increases along the longitudinal axis (LA) in the direction along which the main body (2) tapers.

13. Calibration standard (1) according to any of claims 1 to 12, **characterized in that,** in the outer surface (7) of the main body (2), recesses (8), in particular spherical recesses (8), are introduced, into which the calibration sphere elements (9) are inserted.

14. Calibration standard (1) according to any of claims 1 to 12, **characterized in that** the calibration sphere elements (9) are each fastened to pins (31), each of which has, on an end face (33), a recess (32), in particular a spherical recess (32), into which a corresponding calibration sphere element (9) is inserted, and each of which is inserted with another end (34) into a corresponding bore (35) on the outer surface (7) of the main body (7), wherein a partial portion of the pin (31) protrudes with respect to the outer surface (7).

15. Calibration standard (1) according to any of the preceding claims, **characterized in that** the main body (2) is made from a carbon fiber composite.

16. Calibration standard (1) according to any of the preceding claims, **characterized in that**
the base plate (3) is made entirely or predominantly of metal, **and/or that**
the main body (2) is glued to the upper side (14) of the base plate (3).

17. Calibration standard (1) according to any of the preceding claims, **characterized in that**
the calibration standard (1) further comprises a hood arrangement (4) which can be screwed onto the base plate (3) on the upper side (14) of the base plate (3),
wherein the hood arrangement (4) in the region of its underside (21) forms a hood thread (16), in particular an internal thread, and the base plate (3) forms a matching base plate thread (15), in particular an external thread, **and that**
the hood arrangement (4) completely covers the main body (2) together with the base plate (3) in the screwed-on state.

18. Calibration standard (1) according to claim 17, **characterized in that**
the hood arrangement (4) has a base ring (5) on which the hood thread (16) is formed,
in particular wherein the base ring (5) is made entirely or predominantly of metal,
**and that** the hood arrangement (4) has a hood cup (6) which is fastened, in particular glued, in the region of an upper side (37) of the base ring (5),
in particular wherein the hood cup (6) is at least partially made of a transparent material and/or of plastic, preferably of a transparent plastic.

19. Calibration standard (1) according to any of the preceding claims, **characterized in that**
the three-point bearing (25) comprises three pairs of bearing balls (22) or three hard metal rollers (43) which are attached, in particular glued, to the underside (21) of the base plate (3),
**and that** the holding magnet (23) is fastened, in particular screwed, centrally between the bearing balls (22) or hard metal rollers (43) on the underside (21) of the base plate (3).

20. Calibration standard according to claim 19, **characterized in that** the holding magnet is formed by a round blank.

21. Calibration standard system (50),
comprising a calibration standard (1) according to any of the preceding claims and an adapter plate (40),
wherein, on an upper side (41) of the adapter plate (40), a three-point counter bearing (42) and a counter holding magnet (44) are formed, corresponding to a position image of the three-point bearing (25) and of the holding magnet (23) of the base plate (3) of the calibration standard (1),
and wherein the adapter plate (40) further forms, in the region of its underside (45), a clamping pin (46) for clamping in a clamp mount (51) of a coordinate measuring machine (52).

22. Use of a calibration standard system (50) according to claim 21, with the following steps:
Step a) in any order, the calibration standard (1) and the adapter plate (40) are fastened to each other via the three-point bearing (25), the three-point counter bearing (42), the holding magnets (23) and the counter holding magnet (44), and the adapter plate (40) is fastened with the clamping pin (46) in a clamp mount (51) of a coordinate measuring machine (52);
Step b) geometric dimensions of the calibration standard (1) are measured tactilely with the coordinate measuring machine (52);
Step c) the calibration standard (1) is removed from the adapter plate (40);
Step d) the calibration standard (1) is transferred to an industrial computer tomograph (56);
Step e) geometric dimensions of the calibration standard (1) are measured with x-ray imaging using the industrial computer tomograph (56), wherein the calibration standard (1) is rotated about an axis of rotation (DA) of the computer tomograph (56) which runs parallel to the longitudinal axis (LA) of the calibration standard (1);
Step f) the geometric dimensions of the calibration standard (1) measured using x-ray imaging and the tactilely measured geometric dimensions of the calibration standard (1) are compared with each other in order to verify the function of the industrial computer tomograph (56) and/or to adjust the industrial computer tomograph (56).

23. Use of the calibration standard system (50) according to claim 22, **characterized in that**
the calibration standard (1) is further designed according to any of claims 17 or 18,
**that,** in step b), the hood arrangement (4) is in an unscrewed state,
**that,** after step b) and before step d), the hood arrangement (4) is being screwed on,
**and that,** in step e), the hood arrangement (4) is in a screwed on state.

24. Use of the calibration standard system (50) according to claim 23, **characterized in that,**
in the screwed-on state of the hood arrangement (4), a part of the hood arrangement (4), in particular a first, radially outer, circumferential surface, and a part of the base plate (3), in particular a second, radially outer, circumferential surface, adjoin one another at a contact surface (28), and in particular sit flush against each other,
**that,** after step b) and before step d), after the hood arrangement (4) has been screwed on, a seal (26) is applied to these two parts of the hood arrangement (4) and the base plate (3), which seal overlaps the contact surface (28),
**and that,** before step e), it is verified that the seal (26) is undamaged.

## Revendications

1. Etalon de calibrage (1) dévolu à un tomodensitomètre industriel (56),
ledit étalon de calibrage (1) étant muni d'un corps de base (2) présentant un axe longitudinal (LA),
lequel corps de base (2) est pourvu d'une surface extérieure (7) qui est conçue pour offrir un tracé ininterrompu tout autour de l'axe longitudinal (LA), par rapport à une direction périphérique, et s'étend le long dudit axe longitudinal (LA),
sachant qu'une multiplicité d'éléments sphériques de calibrage (9) est fixée audit corps de base (2) avec répartition sur ladite surface extérieure (7) dirigée radialement vers l'extérieur,
lesquels éléments sphériques de calibrage (9) sont répartis sur une multiplicité d'emplacements axiaux par rapport à l'axe longitudinal (LA),
sachant que le corps de base (2) s'amenuise, dans la région de la surface extérieure (7), le long de l'axe longitudinal (LA),
et sachant que lesdits éléments sphériques de calibrage (9) sont répartis sur une multiplicité d'emplacements radiaux par rapport audit axe longitudinal (LA),
**caractérisé par le fait**
**que** ledit étalon de calibrage (1) est par ailleurs doté d'une platine de base (3) ;
par le fait que le corps de base (2) est fixé au niveau d' une face supérieure (14) de ladite platine de base (3) ;
et par le fait qu'un palier (25) à trois points et un aimant de maintien (23) sont ménagés au niveau d'une face inférieure (21) de ladite platine de base (3).

2. Etalon de calibrage (1) selon la revendication 1, **caractérisé par le fait que** le corps de base (2) s'amenuise continûment, dans la région de la surface extérieure (7), le long de l'axe longitudinal (LA).

3. Etalon de calibrage (1) selon l'une des revendications 1 ou 2, **caractérisé par le fait que** le corps de base (2) est symétrique en rotation, par rapport à l'axe longitudinal (LA), au moins dans la région de la surface extérieure (7).

4. Etalon de calibrage (1) selon la revendication 3, **caractérisé par le fait que** le corps de base (2) est de réalisation conique, au moins dans la région de la surface extérieure (7).

5. Etalon de calibrage (1) selon la revendication 3, **caractérisé par le fait que** le corps de base (2) est réalisé pour correspondre à une partie d'une surface sphérique, au moins dans la région de la surface extérieure (7).

6. Etalon de calibrage (1) selon l'une des revendications 1 ou 2, **caractérisé par le fait que** le corps de base (2) présente par rapport à l'axe longitudinal (LA), au moins dans la région de la surface extérieure (7), une symétrie de rotation avec ledit axe longitudinal (LA) à raison de N fois l'axe de rotation, N étant ≥ 6.

7. Etalon de calibrage (1) selon l'une des revendications 1 à 6, **caractérisé par le fait qu'**au moins une pluralité des éléments sphériques de calibrage (9) obéit à la spécificité suivant laquelle aucun autre élément sphérique de calibrage (9) ne s'étend dans un intervalle axial (29) dans lequel un élément sphérique de calibrage (9) considéré s'étend le long de l'axe longitudinal (LA),
sachant notamment que tous les éléments sphériques de calibrage (9) obéissent à ladite spécificité suivant laquelle aucun autre élément sphérique de calibrage (9) ne s'étend dans un intervalle axial (29) dans lequel un élément sphérique de calibrage (9) considéré s'étend le long dudit axe longitudinal (LA).

8. Etalon de calibrage (1) selon la revendication 7, **caractérisé par le fait que**, dans la direction axiale également, devant et derrière cet intervalle axial (29), aucun autre élément sphérique de calibrage (9) ne s'étend, à chaque fois, dans un intervalle axial (30) voisin, sachant notamment qu'un intervalle voisin (30) respectif présente une longueur axiale NIL à laquelle s'applique la relation NIL ≥ 0,2*RKK, RKK étant le rayon de courbure de l'élément sphérique de calibrage (9) considéré.

9. Etalon de calibrage (1) selon l'une des revendications précédentes, **caractérisé par le fait qu'**au moins une partie des éléments sphériques de calibrage (9), disposés avec répartition sur la surface extérieure (7) du corps de base (2), est agencée suivant une spirale (36), sachant de préférence que, dans ladite spirale (36), des éléments sphériques de calibrage (9) en succession mutuelle sont espacés à chaque fois les uns des autres d'une même distance (AA), le long de l'axe longitudinal (LA), et sont décalés les uns des autres selon des angles de rotation identiques (WV) tout autour dudit axe longitudinal (LA).

10. Etalon de calibrage (1) selon l'une des revendications précédentes, **caractérisé par le fait que** le corps de base (2) est réalisé sous la forme d'un corps creux.

11. Etalon de calibrage (1) selon la revendication 10, **caractérisé par le fait qu'**une épaisseur de paroi (WS) du corps de base (2) est constante dans la région de la surface extérieure (7), le long de l'axe longitudinal (LA).

12. Etalon de calibrage (1) selon la revendication 10, **caractérisé par le fait qu'**une épaisseur de paroi (WS) du corps de base (2) croît dans la région de la surface extérieure (7), le long de l'axe longitudinal (LA), dans la direction le long de laquelle ledit corps de base (2) s'amenuise.

13. Etalon de calibrage (1) selon l'une des revendications 1 à 12, **caractérisé par le fait que** des renfoncements (8), en particulier des renfoncements sphériques (8) dans lesquels les éléments sphériques de calibrage (9) sont intégrés, sont façonnés dans la surface extérieure (7) du corps de base (2).

14. Etalon de calibrage (1) selon l'une des revendications 1 à 12, **caractérisé par le fait que** les éléments sphériques de calibrage (9) sont fixés, à chaque fois, à des chevilles enfichables (31) qui sont pourvues respectivement, à une extrémité frontale (33), d'un renfoncement (32) et notamment d'un renfoncement sphérique (32) dans lequel un élément sphérique de calibrage (9) respectif est intégré, et qui sont introduites à chaque fois, par une autre extrémité (34), dans un alésage respectif (35) pratiqué au niveau de la surface extérieure (7) du corps de base (2), la cheville enfichable (31) étant en saillie, par un tronçon partiel, vis-à-vis de ladite surface extérieure (7).

15. Etalon de calibrage (1) selon l'une des revendications précédentes, **caractérisé par le fait que** le corps de base (2) est fabriqué en un matériau composite à fibres de carbone.

16. Etalon de calibrage (1) selon l'une des revendications précédentes, **caractérisé par le fait**
**que** la platine de base (3) est intégralement ou majoritairement fabriquée en métal ;
et/ou par le fait que le corps de base (2) est rapporté par collage au niveau de la face supérieure (14) de ladite platine de base (3).

17. Etalon de calibrage (1) selon l'une des revendications précédentes, **caractérisé par le fait**
**que** ledit étalon de calibrage (1) comprend en outre un ensemble (4) formant capot, qui peut être rapporté par vissage sur la platine de base (3), au niveau de la face supérieure (14) de ladite platine de base (3),
sachant que ledit ensemble (4) formant capot comporte un filetage (16), en particulier un filetage intérieur dans la région de sa face inférieure (21), et que la platine de base (3) comporte un filetage complémentaire (15), en particulier un filetage extérieur ;
et par le fait que ledit ensemble (4) formant capot recouvre l'intégralité du corps de base (2) à l'état rapporté par vissage, conjointement à ladite platine de base (3).

18. Etalon de calibrage (1) selon la revendication 17, **caractérisé par le fait que** l'ensemble (4) formant capot est muni d'un anneau de base (5) sur lequel le filetage (16) du capot est façonné,
sachant, en particulier, que ledit anneau de base (5) est intégralement ou majoritairement fabriqué en métal ;
et **par le fait que** ledit ensemble (4) formant capot est pourvu d'un gobelet (6) fixé, notamment rapporté par collage dans la région d'une face supérieure (37) dudit anneau de base (5),
sachant, en particulier, que ledit gobelet (6) du capot est fabriqué, au moins en partie, en un matériau transparent et/ou en matière plastique, de préférence en une matière plastique transparente.

19. Etalon de calibrage (1) selon l'une des revendications précédentes, **caractérisé par le fait**
**que** le palier (25) à trois points comprend trois paires de billes de montage (22) ou trois rouleaux (43) en métal dur qui sont fixés, notamment rapportés par collage au niveau de la face inférieure (21) de la platine de base (3) ;
et par le fait que l'aimant de maintien (23) est fixé, notamment rapporté par vissage au niveau de ladite face inférieure (21) de la platine de base (3), au centre entre lesdites billes de montage (22) ou lesdits rouleaux (43) en métal dur.

20. Etalon de calibrage (1) selon la revendication 19, **caractérisé par le fait que** l'aimant de maintien est constitué d'une pièce circulaire.

21. Système (50) d'étalonnage de calibrage
comprenant un étalon de calibrage (1) conforme à l'une des revendications précédentes, ainsi qu'une platine d'adaptation (40),
un palier complémentaire (42) à trois points et un aimant complémentaire de maintien (44) étant ménagés au niveau d'une face supérieure (41) de ladite platine d'adaptation (40), en concordance avec une configuration des positionnements du palier (25) à trois points et de l'aimant de maintien (23) de la platine de base (3) dudit étalon de calibrage (1),
et ladite platine d'adaptation (40) comportant par ailleurs, dans la région de sa face inférieure (45), un tenon de serrage (46) conçu pour être enchâssé dans un palier d'ablocage (51) d'une machine (52) de mesure de coordonnées.

22. Utilisation d'un système (50) d'étalonnage de calibrage conforme à la revendication 21, incluant les étapes suivantes :
étape a) : suivant n'importe quel ordre successif, l'étalon de calibrage (1) est fixé sur la platine d'adaptation (40) par l'intermédiaire du palier (25) à trois points, du palier complémentaire (42) à trois points, de l'aimant de maintien (23) et de l'aimant complémentaire de maintien (44) mutuellement en applique, et ladite platine d'adaptation (40) est fixée, par le tenon de serrage (46), dans un palier d'ablocage (51) d'une machine (52) de mesure de coordonnées ;
étape b) : des cotes géométriques dudit étalon de calibrage (1) sont mesurées tactilement à l'aide de ladite machine (52) de mesure de coordonnées ;
étape c) : ledit étalon de calibrage (1) est retiré de ladite platine d'adaptation (40) ;
étape d) : ledit étalon de calibrage (1) est convoyé vers un tomodensitomètre industriel (56) ;
étape e) : des cotes géométriques dudit étalon de calibrage (1) sont mesurées aux rayons X à l'aide dudit tomodensitomètre industriel (56), une rotation étant alors imprimée audit étalon de calibrage (1) autour d'un axe de rotation (DA) dudit tomodensitomètre (56) qui s'étend parallèlement à l'axe longitudinal (LA) dudit étalon de calibrage (1) ;
étape f) : les cotes géométriques de l'étalon de calibrage (1) mesurées aux rayons X, et les cotes géométriques dudit étalon de calibrage (1) mesurées tactilement, sont comparées les unes aux autres afin de vérifier le fonctionnement dudit tomodensitomètre industriel (56) et/ou afin de régler ledit tomodensitomètre industriel (56).

23. Utilisation du système (50) d'étalonnage de calibrage conformément à la revendication 22, **caractérisée par le fait**
**que** l'étalon de calibrage (1) est réalisé, par ailleurs, en conformité avec l'une des revendications 17 ou 18 ;
par le fait que l'ensemble (4) formant capot est dévissé à l'étape b) ;
par le fait que ledit ensemble (4) formant capot est mis en place par vissage à l'issue de l'étape b) et préalablement à l'étape d) ;
et par le fait que ledit ensemble (4) formant capot est mis en place par vissage à l'étape e).

24. Utilisation du système (50) d'étalonnage de calibrage conformément à la revendication 23, **caractérisée par le fait**
**que**, l'ensemble (4) formant capot se trouvant à l'état mis en place par vissage, une partie dudit ensemble (4) formant capot, notamment une première surface périphérique radialement extérieure, et une partie de la platine de base (3), notamment une seconde surface périphérique radialement extérieure, se joignent l'une à l'autre au niveau d'une surface de contact (28), en particulier dans l'affleurement l'une de l'autre ;
par le fait qu'à l'issue de l'étape b) et préalablement à l'étape d), après que ledit ensemble (4) formant capot a été mis en place par vissage, un joint (26) est appliqué sur ces deux parties dudit ensemble (4) formant capot et de ladite platine de base (3), lequel joint vient coiffer ladite surface de contact (28) ;
et par le fait que, préalablement à l'étape e), il est vérifié que ledit joint (26) ne soit pas détérioré.
